# EUROPÄISCHE PATENTSCHRIFT

(11) **EP 3 711 126 B1**
(45) Veröffentlichungstag und Bekanntmachung des Hinweises auf die Patenterteilung: **30.06.2021**
(21) Anmeldenummer: 19701218.0
(22) Anmeldetag: 21.01.2019
(51) Int. Cl.: H02G 3/06, F16L 5/00, F16L 43/02, F16L 41/00

(54) **WINKELVERSCHRAUBUNGSSYSTEM**
ELBOW SCREW JOINT SYSTEM
SYSTÈME DE RACCORD À VIS COUDÉ

(30) Priorität: 22.01.2018 DE 102018101350
(43) Veröffentlichungstag der Anmeldung: 23.09.2020
(73) Patentinhaber: Pflitsch GmbH & Co. KG., 42499 Hückeswagen (DE)
(72) Erfinder: LECHNER, Martin, 51789 Lindlar (DE)
(74) Vertreter: Geskes, Christoph
(86) Internationale Anmeldenummer: PCT/EP2019/051335
(87) Internationale Veröffentlichungsnummer: WO 2019/141837

(56) Entgegenhaltungen:
- CN-U- 202 068 138
- DE-U1-202015 101 698
- JP-A- 2011 072 172
- US-A- 960 744
- US-A- 2 955 851

## Beschreibung

Die Erfindung betrifft ein Winkelverschraubungssystem zur Verschraubung und Umleitung von Langformteilen, wie beispielsweise Kabeln, Rohren oder Schläuchen.

Aus dem Stand der Technik sind Winkelverschraubungen allgemein bekannt.

DE 20 2015 101 698 U1 beschreibt beispielsweise eine Vorrichtung zur Durchführung von flexiblen Langformteilen durch eine mit einer Durchführlochung versehenen Wandung eines Gehäuses, bestehend aus mindestens einem Doppelnippel mit an beiden Endbereichen ausgebildetem Außengewinde, wobei ein Winkelstück in Form eines Hohlkörpers vorgesehen ist, dessen Hohlraum einen ersten Abgang aufweist, der durch die Durchführlochung steckbar ist, und mindestens einen zweiten Abgang, dessen Mittellängsachse mit der Mittellängsachse des ersten Abgangs einen von 0° abweichenden Winkel einschließt.

Mit den aus dem Stand der Technik bekannten Systemen ist eine Ausrichtung eines Kabelauslasses, insbesondere im eingebauten Zustand, nur schwer möglich. Die bekannten Winkelverschraubungen werden bei der Montage ausgerichtet und danach das Langformteil hindurchgeführt. Eine nachträgliche Änderung der Ausrichtung ist nicht mehr möglich.

CN 202068138 U offenbart eine Winkelverschraubung mit einem Leitkörper und einem Einsetzteil, welches in den Leitkörper eingesetzt werden kann.

JP 2011 072172 A offenbart die Bereitstellung eines Abzweigverbinders, der in der Lage ist, das Verlegen eines Kabels zu erleichtern und das Kabel in einer kurzen Zeitspanne zu verlegen.

US 2 955 851 A offenbart einem Ziehbogen mit einem ein hohlen Gehäuse mit einem Paar offen gebohrter Rohrleitungen, die integrierte Naben aufnehmen, die wiederum mit ihren Achsen rechtwinklig zueinander angeordnet sind, wobei eine Deckfläche am Gehäuse in einem Winkel von 45° zu den Nabenachsen angeordnet ist.

US 960 744 A offenbart eine elektrische Leitungsarmatur mit einer Vielzahl von Abzweigungen, die in einem Winkel zueinander stehen und an ihrer Verbindungsstelle nach außen gewölbt und vergrößert sind und einen Körper bilden, der im Wesentlichen kreisförmig ist, um eine vergrößerte Öffnung bereitzustellen, die den Öffnungen der Abzweigungen zugewandt ist. Die Leitungsarmatur umfasst einen abnehmbaren Verschluss für die Öffnung, der an dem Körper befestigt werden kann.

Aufgabe der Erfindung ist es, ein verbessertes Winkelverschraubungssystem zur Verfügung zu stellen. Insbesondere ist es Aufgabe der Erfindung, ein Winkelverschraubungssystem zur Verfügung zu stellen, dass eine einfache und schnelle Montage beziehungsweise Verschraubung ermöglicht. Weiterhin ist es Aufgabe der Erfindung, ein Winkelverschraubungssystem zur Verfügung zu stellen, das eine einfache nachträgliche Korrektur der Ausrichtung einer Auslassausnehmung ermöglicht.

Die Aufgabe wird erfindungsgemäß gelöst mittels eines Winkelverschraubungssystems zur Verschraubung und Umleitung von Langformteilen umfassend einen Leitkörper, ein Einsetzteil und einen Deckel, wobei das Einsetzteil mindestens einen drehbar zumindest teilweise in einem Inneren des Leitkörpers angeordneten Leitabschnitt umfasst, wobei der Leitkörper eine Leitausnehmung und mindestens eine Auslassausnehmung aufweist, wobei die Leitausnehmung eine Leitachse aufweist und sich entlang der Leitachse von einer Aufnahmeseite bis zu einer gegenüberliegenden Kopfseite des Leitkörpers erstreckt und wobei die Auslassausnehmung eine Auslassachse aufweist und sich von mindestens einer Auslassseite des Leitkörpers entlang der Auslassachse zumindest bis zur Leitausnehmung erstreckt, wobei die Leitachse und die Auslassachse einen Winkel zueinander aufweisen, wobei der Leitabschnitt an einem der Kopfseite des Leitkörpers zuordenbaren oberen Endbereich ein Gewinde aufweist, und wobei der Deckel von der Kopfseite mit dem Gewinde des Leitabschnittes verschraubbar ist.

Weiterhin wird ein Verfahren zur Montage eines Winkelverschraubungssystems vorgeschlagen, wobei das Winkelverschraubungssystem einen Leitkörper, ein Einsetzteil und einen Deckel umfasst, wobei das Einsetzteil mindestens einen drehbar zumindest teilweise in einem Inneren des Leitkörpers anordenbaren Leitabschnitt umfasst, wobei mindestens ein Langformteil durch das Einsetzteil und in eine Leitausnehmung des Leitkörpers geführt und aus einer Auslassausnehmung, die winklig zu der Leitausnehmung im Leitkörper angeordnet ist, herausgeführt wird und vor oder nach Führung des Langformteils in oder durch zumindest das Einsetzteil zumindest der Leitabschnitt in eine Leitausnehmung des Leitkörpers eingebracht wird, wobei bei einem Drehen des Leitkörpers um eine Leitachse der Leitausnehmung der Leitabschnitt mitgeführt wird, so dass mindestens eine Ausnehmung des Leitabschnittes auf mindestens eine Auslassausnehmung des Leitkörpers ausgerichtet wird und wobei durch Verschrauben des Deckels über eine Kopfseite des Leitkörpers mit einem Gewinde des Leitabschnittes die Ausrichtung des Leitkörpers fixiert wird.

Weiterhin wird die Aufgabe erfindungsgemäß gelöst mittels einer Verwendung eines Winkelverschraubungssystems zur Verschraubung und Ausrichtung eines Langformteils in einer abgewinkelten Position.

Es wird ein Winkelverschraubungssystem zur Verschraubung und Umleitung von Langformteilen, dass heißt von mindestens einem Langformteil, umfassend einen Leitkörper, ein Einsetzteil und einen Deckel vorgeschlagen. Das Einsetzteil umfasst zumindest einen drehbar zumindest teilweise in einem Inneren des Leitkörpers angeordneten Leitabschnitt. Der Leitkörper weist eine Leitausnehmung und mindestens eine Auslassausnehmung auf. Die Leitausnehmung weist eine Leitachse auf und erstreckt sich entlang der Leitachse von einer Aufnahmeseite bis zu einer gegenüberliegenden Kopfseite. Die Auslassausnehmung weist eine Auslassachse auf und erstreckt sich von mindestens einer Auslassseite entlang der Auslassachse zumindest bis zur Leitausnehmung, wobei die Leitachse und die Auslassachse einen Winkel zueinander aufweisen Der Leitabschnitt weist an einem der Kopfseite des Leitkörpers zuordenbaren oberen Endbereich ein Gewinde auf, und wobei der Deckel von der Kopfseite mit dem Gewinde des Leitabschnittes verschraubbar ist.

Mit dem erfindungsgemäßen Winkelverschraubungssystem kann vorteilhaft eine einfache und schnelle Verschraubung von Langformteilen erfolgen, wobei insbesondere eine Ausrichtung der Auslassachse, insbesondere durch Drehen des Leitkörpers um die Leitachse, und damit letztendlich auch der Langformteile in die gewünschte Richtung gegenüber dem Stand der Technik vereinfacht wird. Weiterhin kann mit dem vorgeschlagenen Winkelverschraubungssystem eine nachträgliche Korrektur der Ausrichtung der Auslassachse erflogen, indem beispielsweise eine Verschraubung des Deckels mit dem Leitabschnitt gelockert wird und der Leitkörper, zum Beispiel mit Hilfe des mindestens einen Langformteils, ausgerichtet wird.

Langformteile umfassen zumindest einen länglichen, insbesondere biegsamen, Körper ausgewählt aus einer Gruppe umfassend Kabel, Schläuche und/oder Rohre. Besonders bevorzugt wird das Winkelverschraubungssystem zur Verschraubung von Kabeln verwendet.

Der Leitkörper, das Einsetzteil und/oder der Deckel umfassen insbesondere zumindest ein Material ausgewählt aus einer Gruppe umfassend einen Kunststoff und/oder ein Metall, bevorzugt Edelstahl und/oder Messing.

Der Leitkörper umfasst die Aufnahmeseite und die gegenüberliegende Kopfseite. Erfindungsgemäß weist der Leitkörper zumindest eine Auslassseite auf, von der aus sich die zumindest eine Auslassausnehmung in Richtung der Leitausnehmung erstreckt. In einer Ausgestaltung erstrecken sich etwa 1, etwa 2, etwa 3 oder mehr als etwa 3 Auslassausnehmungen von einer Auslassseite in Richtung der Leitausnehmung. In einer weiteren Ausgestaltung umfasst der Leitkörper etwa 1, etwa 2, etwa 3, etwa 4 oder mehr als etwa 4 Auslassseiten. Jede der Auslassseiten kann dabei ein oder mehreren Auslassausnehmungen zugeordnet sein. Das Innere des Leitkörpers umfasst die Leitausnehmung und die zumindest eine Auslassausnehmung. Der Leitkörper ist in einer Ausführungsform im Wesentlichen quaderförmig, bevorzugt würfelförmig, ausgestaltet. In einer weiteren Ausführungsform ist der Leitkörper im Wesentlichen kugelförmig oder eiförmig ausgestaltet. In einer weiteren Ausgestaltung ist der Leitkörper im Wesentlichen zylinderförmig ausgestaltet. Weitere geometrische Ausgestaltungen sind möglich. Die Aufnahmeseite, die Kopfseite und/oder die mindestens eine Auslassseite weisen bevorzugt einen ebenen Flächenabschnitt auf. Insbesondere ist der ebene Flächenabschnitt der Leitausnehmung beziehungsweise der Auslassausnehmung zugeordnet.

Der Begriff "im Wesentlichen", wie er im Sinne der vorliegenden Erfindung verstanden und benutzt wird, gibt einen Toleranzbereich an, der für den Fachmann unter wirtschaftlichen und technischen Gesichtspunkten zu vertreten ist, so dass das entsprechende Merkmal noch als solches zu erkennen oder verwirklicht ist.

Die Leitausnehmung erstreckt sich in Richtung der Leitachse. Bevorzugt ist die Leitachse eine Gerade. In einer Ausgestaltung ist vorgesehen, dass die Leitausnehmung eine glatte Innenfläche, und bevorzugt kein Gewinde aufweist. In einer weiteren Ausgestaltung ist die Innenwandung der Leitausnehmung gerillt oder mit einem Gewinde ausgestaltet. In einer weiteren Ausführungsform weist die Leitausnehmung des Leitkörpers eine Verjüngung auf. Bevorzugt ist die Verjüngung des Leitkörpers der Kopfseite des Leitkörpers zugeordnet. In einer weiteren Ausgestaltung ist vorgesehen, dass die Leitausnehmung zumindest einen ersten Abschnitt mit einem ersten Innendurchmesser und weiter bevorzugt zumindest einen zweiten Abschnitt mit einem zweiten Innendurchmesser aufweist, wobei insbesondere der zweite Innendurchmesser kleiner ist als der erste Innendurchmesser. Der zweite Abschnitt ist bevorzugt der Kopfseite zugeordnet.

In einer weiteren Ausgestaltung ist vorgesehen, dass in der Leitausnehmung der erste Abschnitt zum zweiten Abschnitt kontinuierlich, schrittweise oder und/sprunghaft übergeht. Insbesondere verjüngt sich der erste Abschnitt zum zweiten Abschnitt hin. In einer weiteren Ausführungsform ist vorgesehen, dass die Leitausnehmung nur den ersten Abschnitt, sich erstreckend von der Aufnahmeseite bis zur Kopfseite, aufweist, und bevorzugt keine Durchmesserveränderung aufweist.

In einer Ausführungsform ist vorgesehen, dass zumindest teilweise in der Leitausnehmung zumindest ein Positioniermittel zur Ausrichtung des Leitabschnittes angeordnet ist. Insbesondere wirkt das zumindest eine Positioniermittel mit zumindest einer Positioniergeometrie des Leitabschnittes zusammen, wie dies beispielsweise weiter unten nähergehend erläutert ist. In einer Ausgestaltung ragt das Positioniermittel zumindest teilweise radial aus der Innenwandung des Leitkörpers nach innen in die Leitausnehmung. In einer einteiligen Ausgestaltung ist vorgesehen, dass das Positioniermittel mit der Innenwandung respektive mit dem Leitkörper materialverbunden ist. In einer mehrteiligen Ausgestaltung ist das Positioniermittel ein gefügtes Teil, das in eine Ausnehmung, die der Leitausnehmung zugeordnet ist, eingefügt ist. Bevorzugt umfasst das zumindest eine Positioniermittel zumindest einen Spannstift. In einer weiteren Ausgestaltung umfasst das Positioniermittel zumindest eine Nut. Weiter bevorzugt ist das Positioniermittel der Kopfseite zugeordnet, und weiter bevorzugt im zweiten Abschnitt der Leitausnehmung im Bereich einer Verjüngung, wie oben beschrieben. In einer weiteren Ausgestaltung ist das Positioniermittel der Aufnahmeseite und/oder der Kopfseite zugeordnet.

Die Leitachse und die Auslassachse weisen einen Winkel zueinander auf. Bevorzugt ist der Winkel größer als 0°, weiter bevorzugt liegt der Winkel in einem Bereich zwischen etwa 20° und etwa 170°, weiter bevorzugt ist der Winkel etwa 90°.

Wird im Rahmen der Erfindung der Begriff "etwa" im Zusammenhang mit Werten oder Wertebereichen verwendet, so ist darunter ein Toleranzbereich zu verstehen, den der Fachmann auf diesem Gebiet für üblich erachtet, insbesondere ist ein Toleranzbereich von ±20 %, bevorzugt ±10 %, weiter bevorzugt ±5 % vorgesehen.

Die mindestens eine Auslassseite ist bevorzugt nicht identisch mit der Aufnahmeseite und weiter bevorzugt nicht identisch mit der Kopfseite. In einer Ausgestaltung ist die Auslassseite identisch mit der Kopfseite, wobei weitere Auslassseiten vorgesehen sein können. Die Auslassseite zeichnet sich insbesondere durch zumindest eine Auslassöffnung aus, die bevorzugt Teil der zumindest einen Auslassausnehmung ist. Die mindestens eine Auslassausnehmung erstreckt sich bevorzugt entlang der Auslassachse, kann aber in einer Ausgestaltung zumindest abschnittsweise einen kurvenförmigen Verlauf aufweisen. Die Auslassachse und/oder die Leitachse sind bevorzugt jeweils eine Gerade. Die Auslassachse vorzugsweise winkelig zur Leitachse ausgerichtet, im Falle einer Identität der Auslassseite mit der Kopfseite fallen bei Achsen zusammen. Die Auslassachse ist insbesondere durch einen Auslassabschnitt der Auslassausnehmung definiert, der der Auslassseite respektive der Auslassöffnung zugeordnet ist. Bevorzugt erstreckt sich der Auslassabschnitt gerade. Weiter bevorzugt weist der Auslassabschnitt ein Gewinde auf, bevorzugt ein Innengewinde. In einer weiteren Ausgestaltung erstreckt sich der Auslassabschnitt bis zur Leitausnehmung.

In der mindestens einen Auslassausnehmung kann ein Auslassnippel angeordnet sein. Der Auslassnippel ist beispielsweise ein Nippel für eine Kabelverschraubung, beispielsweise der unter dem Markennamen blueglobe CLEAN Plus® vertriebene Auslassnippel der PFLITSCH GmbH & Co KG, Hückeswagen, beispielweise in der Ausgestaltung, die im Katalog PFLITSCH-Kabelverschraubungen 04.16 auf Seite 380 angeboten wird. In einer Ausgestaltung umfasst der Auslassnippel zumindest ein Außengewinde. Weiterhin ist in einer Ausgestaltung vorgesehen, dass der Auslassnippel eine durchgehende Öffnung zur Durchführung mindestens eines Langformteiles aufweist. Bevorzugt weist der Auslassnippel eine Auslassdichtung auf, die weiter bevorzugt in dessen durchgehender Öffnung angeordnet ist. Insbesondere kann mittels der Auslassdichtung eine Abdichtung des mindestens einen Langformteils, insbesondere zu der Außenoberfläche des Langformteils, vorgenommen werden. Der Auslassnippel umfasst bevorzugt einen Gewindedurchmesser, der in die Auslassausnehmung des Leitkörpers einfügbar ist.

Das Einsetzteil umfasst erfindungsgemäß zumindest den Leitabschnitt. Vorzugsweise ist der Leitabschnitt im Wesentlichen rohr- oder hülsenförmig ausgestaltet. In einer weiteren Ausführungsform ist der Leitabschnitt käfigartig oder gitterartig ausgestaltet und umfasst insbesondere eine Anzahl von Stäben. Beispielsweise umfasst der Leitabschnitt etwa zwei, etwa drei oder etwa vier Stäbe. In einer weiteren Ausgestaltung umfasst der Leitabschnitt mehr als etwa 4 Stäbe. Insbesondere erstrecken sich die Stäbe in Richtung der Längsachse des Leitabschnittes. In einer weiteren Ausführungsform sind die Stäbe mittels zumindest einem Ring oder einem Ringabschnitt miteinander verbunden. Bevorzugt ist der Ring oder Ringabschnitt der Aufnahmeseite des Leitkörpers zugeordnet. Vorzugsweise umfasst der Leitabschnitt zumindest zwei Ringe oder Ringabschnitte. Bevorzugt sind einer der beiden Ringe oder Ringabschnitte der Aufnahmeseite des Leitkörpers und der andere der beiden Ringe oder Ringabschnitte der Kopfseite des Leitkörpers zugeordnet. In einer weiteren Ausgestaltung umfasst der Leitabschnitt eine Spiralfeder. Weiterhin ist in einer Ausführungsform vorgesehen, dass der Leitabschnitt zumindest teilweise spiralfederförmig ausgestaltet ist. Diese Ausgestaltung kann zu einer vorteilhaften Vorspannung bei der Montage des Leitabschnittes mit dem Leitkörper und/oder dem Winkelverschraubungssystem mit einer Anschlussgeometrie, die beispielhaft unten beschrieben ist, verwendet werden.

Der Leitabschnitt ist ausgestaltet, um ein oder mehrere Langformteile aufzunehmen beziehungsweise durchzuleiten. Insbesondere ist der Leitabschnitt ausgestaltet, um ein oder mehrere Kabel, Schläuche oder dergleichen durchzuleiten. Vorzugsweise ist der Leitabschnitt für ein oder mehrere, insbesondere 1 bis etwa 5 Langformteile ausgebildet.

Der Leitabschnitt erstreckt sich entlang einer Längsachse, die bevorzugt eine Gerade ist. Diese ist bevorzugt identisch orientiert zur der Leitachse der Leitausnehmung des Leitkörpers. Weiterhin ist in einer Ausgestaltung vorgesehen, dass der Leitabschnitt eine Mantelfläche aufweist, die mindestens eine Ausnehmung umfasst. In einer Ausführungsform ist vorgesehen, dass sich die Ausnehmung über eine vollständige Länge des Leitabschnittes entlang der Längsachse erstreckt. Die Ausnehmung ist insbesondere derart gestaltet, dass mindestens ein Langformteil durch diese hindurch führbar ist. Weiter bevorzugt ist mittels der Ausnehmung das mindestens eine Langformteil aus dem Leitabschnitt hinaus, und weiter bevorzugt in die Auslassausnehmung hinein, führbar. Vorteilhaft an dieser Ausführungsform ist insbesondere, dass das mindestens eine Langformteil leicht montiert und umgebogen beziehungsweise winkelig weggeführt werden kann, in dem es beispielsweise der Länge nach durch den Leitabschnitt geführt und dann in die Ausnehmung hinein gebogen oder abgewinkelt wird. In einer alternativen Ausführungsform ist vorgesehen, dass sich die Ausnehmung nicht über eine vollständige Länge des Leitabschnittes entlang der Längsachse erstreckt, insbesondere, wenn keine Ringabschnitte, wie oben beschrieben, sondern Ringe vorgesehen sind. Es ist grundsätzlich vorzusehen, dass die Ausnehmung ausreichend groß für eine Durchführung zumindest eines Langformteils ausgestaltet ist. In einer weiteren Ausführungsform ist vorgesehen, dass der Leitabschnitt eine Mehrzahl von Ausnehmungen, bevorzugt etwa 2, etwa 3, etwa 4 oder mehr als etwa 4 Ausnehmungen, aufweist. Bevorzugt erlaubt die Mehrzahl von Ausnehmungen eine Mehrzahl von Langformteilen auf unterschiedlichen Höhen, in unterschiedliche Richtungen und/oder in unterschiedlichen Winkeln zur Längsachse aus dem Leitabschnitt beziehungsweise aus dem Leitkörper herauszuführen, was unter Umständen auch mit einer einzigen Ausnehmung erreichbar ist. In einer weiteren Ausgestaltung ist vorgesehen, dass eine Mehrzahl von Leitabschnitten in Richtung der Längsachse nacheinander angeordnet drehbar verbunden sind. Bevorzugt erlauben Ausnehmungen in der Mehrzahl der Leitabschnitte eine Mehrzahl von Langformteilen auf unterschiedlichen Höhen, in unterschiedliche Richtungen und/oder in unterschiedlichen Winkeln zur Längsachse aus dem Leitabschnitt beziehungsweise aus dem Leitkörper herauszuführen, insbesondere wenn eine Mehrzahl von Auslassausnehmungen im Leitkörper vorgesehen ist.

Der Leitabschnitt ist drehbar in dem Leitkörper eingesetzt, und ist weiter bevorzugt von dem Leitkörper bei Drehung mitnehmbar ausgebildet. Weiter bevorzugt weist der Leitabschnitt zumindest eine Positioniergeometrie auf. In einer Ausführungsform ist vorgesehen, dass der Leitabschnitt zumindest eine Positioniergeometrie aufweist, die insbesondere durch zumindest eine Kante der mindestens einen Ausnehmung gebildet ist, so dass durch die Positioniergeometrie die mindestens eine Ausnehmung des Leitabschnitts mit der Auslassausnehmung in Deckung bringbar ist. In einer weiteren Ausführungsform umfasst die eine Sicke in dem Leitabschnitt. Vorzugsweise wirkt die zumindest eine Positioniergeometrie des Leitabschnitts mit dem zumindest einen Positioniermittel des Leitkörpers zusammen. In einer bevorzugten Ausgestaltung ist vorgesehen, dass der Leitabschnitt zumindest zwei Positioniergeometrien, bevorzugt zwei Kanten oder Sicken, aufweist, die weiter bevorzugt mit zumindest zwei Positioniermitteln des Leitkörpers zusammen wirken. In einer weiteren Ausführungsform wirkt die zumindest eine Positioniergeometrie mit dem mindestens einen Langformteil zusammen, das bevorzugt durch den Leitabschnitt respektive die Leitausnehmung und die Auslassausnehmung geführt ist. Die Positioniergeometrie wirkt in einer weiteren Ausführungsform mit mindestens einem Auslassnippel zusammen, der in die Auslassausnehmung eingesetzt ist, wobei in einer weiter bevorzugten Ausführungsform das Gewinde des Auslassnippels in die Leitausnehmung ragt und mit mindestens zwei Positioniergeometrien, bevorzugt zwei Kanten der mindestens einen Ausnehmung des Leitabschnitts, zusammenwirken kann. In einer weiteren Ausgestaltung ist vorgesehen, dass die zumindest eine Positioniergeometrie radial außen beziehungsweise nach außen ragend am Leitabschnitt angeordnet ist. Insbesondere kann die nach außen ragende Positioniergeometrie mit einem als Nut ausgestalteten Positioniermittel des Leitkörpers zusammen wirken. In einer weiteren Ausführungsform ist vorgesehen, dass die zumindest eine Positioniergeometrie der Kopfseite und/oder der Aufnahmeseite des Leitkörpers zugeordnet ist. Durch die zumindest eine Positioniergeometrie wird bewirkt, dass sich der Leitabschnitt beim Ausrichten des Leitkörpers um die Leitachse mit dreht.

In einer Ausführungsform weist der Leitabschnitt einen unteren und einen oberen Endbereich auf. Vorzugsweise ist der untere Endbereich der Aufnahmeseite des Leitkörpers zuordenbar und der obere Endbereich der Kopfseite des Leitkörpers zuordenbar. Der untere Endbereich des Leitabschnitts weist insbesondere ein axiales Fixiermittel auf. Bevorzugt ist das axiale Fixiermittel ein Teil eines Radiallagers. Das axiale Fixiermittel verhindert im Wesentlichen eine axiale Bewegung in zumindest eine axiale Richtung des Leitabschnittes. Weiter bevorzugt wirkt das axiale Fixiermittel mit der Anschlussgeometrie zusammen. In einer weiteren Ausgestaltung ist vorgesehen, dass der untere Endbereich des Leitabschnittes, der der Aufnahmeseite des Leitkörpers zuordenbar ist, ein axiales Fixiermittel aufweist, das mit zumindest einem Haltemittel eines weiter unten beschriebenen Anschlussmittels oder zumindest einer Anschlussgeometrie ein Radiallager bildet. Das axiale Fixiermittel kann als ein zumindest teilweise umlaufender Wulst oder zumindest teilweise umlaufender Vorsprung ausgestaltet sein. In einer weiteren Ausgestaltung weist das axiale Fixiermittel eine Anzahl von Wulstabschnitten und/oder Vorsprüngen auf, insbesondere etwa 2, etwa 3, etwa 4 oder mehr als etwa 4 Wulstabschnitte und/oder Vorsprünge. In einer weiteren Ausgestaltung ist das axiale Fixiermittel als eine umlaufende Rille oder eine Anzahl von Rillenabschnitten ausgebildet, insbesondere etwa 2, etwa 3, etwa 4 oder mehr als etwa 4 Rillenabschnitte. In einer weiteren Ausführungsform ist das axiale Fixiermittel als ein Sprengring ausgestaltet, der bevorzugt in einer Nut des Leitabschnittes angeordnet ist. In einer weiteren Ausführungsform ist vorgesehen, dass das axiale Fixiermittel ein Gewinde, insbesondere ein Außengewinde und/oder ein Innengewinde, aufweist.

In einer weiteren Ausgestaltung weist der Leitabschnitt des Einsetzteils eine Verjüngung mit kleinerem Außendurchmesser auf, die insbesondere eine Spielpassung mit der Verjüngung beziehungsweise dem zweiten Abschnitt des Leitkörpers erlaubt. Weiterhin vorteilhaft ist der obere Endbereich des Leitabschnitts relativ zum unteren Endbereich des Leitabschnitts in einer Ausführungsform verjüngt ausgestaltet und umfasst insbesondere einen kleineren Außendurchmesser. Der obere Endbereich umfasst erfindungsgemäß ein Gewinde. In einer Ausführungsform umfasst der obere Endbereich des Leitabschnitts ein Außengewinde und/oder ein Innengewinde. Der obere Endbereich des Leitabschnitts kann über die Kopfseite des Leitkörpers überstehen, insbesondere dann, wenn ein Außengewinde am oberen Endbereich des Leitabschnitts vorgesehen ist.

Die Anschlussgeometrie ist ein Bauteil, durch das insbesondere mindestens ein Langformteil führbar ist, und ist beispielsweise eine Wandung, ein Gehäuse oder eine Kabelführung. Hierzu wird das Winkelverschraubungssystem an die Anschlussgeometrie angebracht. Vorzugsweise weist die Anschlussgeometrie eine Durchgangsausnehmung auf, durch die das mindestens eine Langformteil führbar ist. Weiter bevorzugt wird die Winkelverschraubung derart an die Anschlussgeometrie angebracht, dass die Leitachse des Leitkörpers und die Längsachse des Leitabschnittes die Durchgangsausnehmung durchgreift. Die Durchgangsausnehmung weist in einer Ausführungsform ein Gewinde auf. In einer weiteren Ausführungsform weist die Durchgangsausnehmung kein Gewinde auf und ist insbesondere als Bohrung ausgestaltet. In einer weiteren Ausführungsform weist die Anschlussgeometrie der Durchgangsausnehmung zugeordnet mindestens ein Haltemittel auf. Das Haltemittel kann eine Ausprägung aufweisen, die beispielsweise aus einer Wandung der Anschlussgeometrie hervorragt. Beispielsweise bilden zumindest das axiale Fixiermittel des Leitabschnitts des Einsetzteils und zumindest ein Teil der Anschlussgeometrie, insbesondere eine Innenwandung der Durchgangsausnehmung, ein Radiallager.

In einer Ausführungsform durchgreift der Leitabschnitt die Durchgangsausnehmung der Anschlussgeometrie. Dabei ist bevorzugt das axiale Fixiermittel als zumindest teilweise umlaufender Vorsprung ausgebildet, der die Anschlussgeometrie hintergreift. Auf diese Weise bildet die Bohrung in Verbindung mit dem Leitabschnitt ein radiales Gleitlager. Die axiale Bewegung des Leitabschnittes beziehungsweise des Einsetzteils wird mittels des Vorsprungs in eine Richtung begrenzt. Eine Begrenzung der axialen Bewegung des Leitabschnittes in die gegengesetzte Richtung wird mittels des mit dem Einsetzteil montierten Leitkörpers begrenzt.

Weiterhin ist in einer bevorzugten Ausgestaltung vorgesehen, dass das Einsetzteil ein Anschlussmittel umfasst, welches im Bereich der Aufnahmeseite des Leitkörpers angeordnet ist. In einer Ausgestaltung ist der Leitabschnitt insbesondere frei drehend mit dem Anschlussmittel ausgebildet. Das Anschlussmittel ist vorzugsweise ein Mittel zur Befestigung des Winkelverschraubungssystems an einer Anschlussgeometrie. Insbesondere weist das Anschlussmittel eine durchgehende Öffnung auf, die bevorzugt zur Durchführung des mindestens einen Langformteils vorgesehen ist. In einer bevorzugten Ausgestaltung ist das Anschlussmittel ein Befestigungsnippel. Weiter bevorzugt weist das Anschlussmittel einen oberen, dem Leitabschnitt zuordenbaren Abschnitt und einen unteren, der Anschlussgeometrie zuordenbaren Abschnitt auf. Der obere Abschnitt des Anschlussmittels umfasst insbesondere das mindestens eine Haltemittel. In einer Ausführungsform ist das Haltemittel des Anschlussmittels derart ausgestaltet, dass dieses zumindest abschnittsweise einen Durchmesser aufweist, der größer ist als der Durchmesser der Leitausnehmung und somit bevorzugt ein Eindringen des Anschlussmittels des Einsetzteils in den Leitkörper begrenzt.

In einer Ausführungsform bilden das mindestens eine Haltemittel der Anschlussgeometrie und/oder des Anschlussmittels mit dem axialen Fixiermittel des Leitabschnittes das Radiallager. Das Haltemittel der Anschlussgeometrie und/oder des Anschlussmittels kann als ein zumindest teilweise umlaufender Wulst oder zumindest teilweise umlaufender Vorsprung ausgestaltet sein. In einer weiteren Ausgestaltung weist das Haltemittel eine Anzahl von Wulstabschnitten und/oder Vorsprüngen auf, insbesondere etwa 2, etwa 3, etwa 4 oder mehr als etwa 4 Wulstabschnitte und/oder Vorsprünge. In einer weiteren Ausgestaltung ist das Haltemittel als eine umlaufende Rille oder eine Anzahl von Rillenabschnitten ausgebildet, insbesondere etwa 2, etwa 3, etwa 4 oder mehr als etwa 4 Rillenabschnitte. In einer weiteren Ausführungsform ist das Haltemittel als ein Sprengring ausgestaltet, der bevorzugt in einer Nut des Anschlussmittels und/oder der Anschlussgeometrie angeordnet ist. In einer weiteren Ausführungsform ist vorgesehen, dass das Haltemittel ein Gewinde, insbesondere en Außengewinde und/oder ein Innengewinde, aufweist. Das axiale Fixiermittel des Leitabschnittes kann beispielsweise mit dem Haltemittel der Haltegeometrie oder des Anschlussmittels lösbar oder unlösbar verbunden sein. Insbesondere bilden das axiale Fixiermittel und das Haltemittel ein Radiallager, das eine bevorzugt freie Drehung des Leitabschnittes zum Anschlussmittel erlaubt. Weiterhin begrenzt im Wesentlichen das Radiallager eine axiale Bewegung des Leitabschnittes zur Anschlussgeometrie oder zum Anschlussmittel, wobei bevorzugt eine axiale Bewegung von etwa 0,1 mm bis etwa 5 mm toleriert ist. Im Allgemeinen umfasst das Radiallager zumindest Teile des Einsetzteils, des Leitkörpers und/oder der Anschlussgeometrie, die eine axiale Bewegung des Leitabschnittes im Wesentlichen einschränken und eine rotatorische Bewegung des Leitabschnittes im Wesentlichen erlauben.

In einer weiteren Ausführungsform ist vorgesehen, dass das axiale Fixiermittel und/oder das Haltemittel der Anschlussgeometrie und/oder des Anschlussmittels zumindest ein Rastmittel aufweisen, insbesondere zur definierten einrastenden Ausrichtung bei einer Drehung um die Längsachse des Leitabschnittes. Bevorzugt weisen Haltemittel des Anschlussmittels und/oder der Anschlussgeometrie zumindest ein weiteres Rastmittel auf, die mit den Rastmitteln des axialen Fixiermittels zusammen wirken. Die Rastmittel können beispielsweise als Erhebungen oder ineinandergreifende Elemente ausgestaltet sein, die eine taktile Rückmeldung, insbesondere durch die Überwindung eines höheren Drehmomentes, bei einem Drehen des Leitabschnitts geben.

In einer Ausführungsform ist vorgesehen, dass das Anschlussmittel am oberen Abschnitt Schlüsselanlageflächen aufweist. Die Schlüsselanlageflächen können insbesondere zum Einschrauben des Anschlussmittels, insbesondere wenn es als Befestigungsnippel ausgestaltet ist, beispielsweise in eine Anschlussgeometrie dienen. Insbesondere weisen die Schlüsselanlageflächen eine Schlüsselweite auf, die derjenigen von Sechskantschrauben. Der untere Abschnitt des Anschlussmittels weist bevorzugt ein Gewinde, weiter bevorzugt ein Außengewinde, auf. Vorteilhafterweise ermöglicht die Schraubenkopfgeometrie ein Einschrauben des Einsetzteils in die Anschlussgeometrie.

In einer bevorzugten Ausgestaltung ist vorgesehen, dass das Anschlussmittel mindestens ein Außengewinde umfasst, bevorzugt genau ein Außengewinde. Insbesondere bei einer Ausgestaltung des Anschlussmittels als Befestigungsnippels ist ein Außengewinde insbesondere am unteren Abschnitt des Anschlussmittels vorgesehen.

In einer weiteren Ausführungsform ist vorgesehen, dass das Anschlussmittel einen Flansch aufweist, der mit der Anschlussgeometrie verbindbar ist. In einer weiteren Ausführungsform ist das Anschlussmittel für eine Klebe- und/oder Schweißverbindung ausgelegt. Insbesondere umfasst das Anschlussmittel eine Anlagefläche, die mit der Anschlussgeometrie verklebbar oder verschweißbar ist.

In einer alternativen Ausgestaltung ist das Anschlussmittel Teil des Leitkörpers, und bevorzugt mit diesem unmittelbar verbunden. Bevorzugt ist in dieser Ausgestaltung der Leitabschnitt frei drehend dem Anschlussmittel zugeordnet, und bevorzugt an diesem anordenbar.

Insbesondere ist eine Innenwandung der Leitausnehmung derart ausgestaltet, dass sich das Einsetzteil leicht in diesem drehen kann. Weiter bevorzugt weist die Leitausnehmung zumindest einen ersten Durchmesser auf, der eine Spielpassung mit dem Einsetzteil erlaubt. In einer weiteren Ausgestaltung weist die Leitausnehmung einen zweiten Durchmesser auf, der eine Bewegung des Einsetzteils in Richtung der Leitachse begrenzt. Insbesondere ist die Verjüngung der Leitausnehmung an die Verjüngung des Leitabschnittes derart angepasst, dass der Leitabschnitt zumindest teilweise in den Leitkörper einfügbar ist. Weiter bevorzugt erlaubt der zweite Durchmesser eine Spielpassung mit dem Einsetzteil, insbesondere mit dem oberen Endbereich des Leitabschnittes. In einer Ausgestaltung umfasst der erste Abschnitt der Leitausnehmung eine Länge in Richtung der Leitachse, die im Wesentlichen der Länge des Leitabschnittes des Einsetzteiles entspricht. In einer weiteren Ausführungsform ist der Leitabschnitt länger oder kürzer als die Leitausnehmung.

Der Deckel weist bevorzugt ein Deckelgewinde auf. Je nach Ausgestaltung des Gewindes des Einsetzteiles beziehungsweise des Leitabschnittes ist das Deckelgewinde ausgestaltet. Beispielsweise umfasst das Einsetzteil am Leitabschnitt ein Innengewinde und das Deckelgewinde ein Außengewinde, das in das Einsetzteil einschraubbar ist. In einer weiteren Ausführungsform ist vorgesehen, dass das Einsetzteil am Leitabschnitt ein Außengewinde aufweist. Ragt der Leitabschnitt im montierten Zustand über die Kopfseite des Leitkörpers hinaus, ist der Deckel kappenförmig ausgestaltet, wobei im Deckel ein Innengewinde angeordnet ist. In einer weiteren Ausgestaltung ist die Leitausnehmung derart ausgestaltet, dass ein kappenförmiger Teil des Deckels zumindest teilweise in diese hineinführbar und auf das Außengewinde des Leitabschnittes aufschraubbar ist. In einer bevorzugten Ausführungsform ist der Deckel derart verschraubbar, dass das Einsetzteil zumindest teilweise mit dem Leitkörper und/oder der Anschlussgeometrie verspannt wird. Weiter vorteilhaft wird das Einsetzteil zumindest teilweise derart verspannt, dass zumindest der Leitabschnitt fixiert wird. Weiter bevorzugt ist der Deckel derart mit dem Leitabschnitt verschraubbar, dass der Leitkörper mit der Anschlussgeometrie verspannt wird. In einer Ausgestaltung, in der das Einsetzteil, bevorzugt das Haltemittel, zumindest abschnittsweise einen größeren Durchmesser aufweist, als die Leitausnehmung des Leitkörpers, und somit den Leitköper hintergreift, ist der Leitkörper mit dem Anschlussmittel des Einsetzteil verspannbar. Weiter bevorzugt ist der Leitkörper derart mit der Anschlussgeometrie verspannt, dass der Leitkörper fixiert, insbesondere nicht drehbar fixiert ist. Bevorzugt ist der Deckel mit einem Drehmoment von etwa 8 Nm bis etwa 15 Nm verschraubt. Bevorzugt ist unter "nicht drehbar fixiert" zu verstehen, dass der Leitkörper nicht von Hand drehbar ist, bevorzugt nur mit einem Drehmoment von größer etwa 13 Nm, weiter bevorzugt größer etwa 17 Nm drehbar ist.

Der Deckel ist in einer Ausführungsform ein Blindstopfen, das heißt er ist insbesondere derart ausgestaltet, dass dieser die Leitausnehmung kopfseitig verschließt. Insbesondere ist unter einem Blindstopfen ein Deckel mit einem Außengewinde zu verstehen. In einer weiteren Ausgestaltung ist der Deckel als Auslassnippel, bevorzugt wie der oben beschriebene Auslassnippel, ausgestaltet.

Leitkörper, Einsetzteil, Deckel und/oder Auslassnippel weisen eine Dichtsitzfläche auf. Bevorzugt ist die Leitausnehmung und/oder die Auslassausnehmung auf der Aufnahmeseite, der Kopfseite und/oder der Auslassseite von einer Dichtsitzfläche umgeben. Weiter bevorzugt umfasst ein Teil eines ebenen Flächenabschnitts der Aufnahmeseite, der Kopfseite und/oder der Auslassseite die Dichtsitzfläche. Weiter bevorzugt ist ein Deckelgewindeansatz oder ein Außengewindeansatz des Auslassnippels von einer Dichtsitzfläche umgeben. Die Dichtsitzfläche stellt vorteilhafterweise zumindest teilweise eine Anlagemöglichkeit für eine Dichtung, insbesondere einen Dichtring, zur Verfügung. Bevorzugt umfasst die Dichtsitzfläche eine metallische oder elektrisch leitende Oberfläche. In einer weiteren Ausgestaltung ist einer Dichtsitzfläche ein die Dichtsitzfläche umlaufender Dichtring zugeordnet. In einer Ausgestaltung ist vorgesehen, dass der Dichtring in einem um die Dichtsitzfläche herum angeordneten Rücksprung oder einer Nut angeordnet ist. Insbesondere sitzt der Dichtring auf einem Absatz des Rücksprunges oder einem Nutgrund auf. Die Nut zur Aufnahme des Dichtrings ist eine bevorzugt kreisförmig umlaufende, bevorzugt winklige Vertiefung im Material des Leitkörpers, insbesondere der Aufnahmeseite, der Kopfseite und/oder der Auslassseite, weiter bevorzugt nur der Aufnahmeseite, des Deckels und/oder des Auslassnippels. Der Rücksprung ist bevorzugt unmittelbar einer Kante des Leitkörpers, insbesondere der Aufnahmeseite, der Kopfseite und/oder der Auslassseite, des Deckels und/oder des Auslassnippels zugeordnet. Weiter bevorzugt ist der Rücksprung kreisförmig umlaufend. Weiter bevorzugt ist der Rücksprung eine winklige Vertiefung im Material des Leitkörpers, insbesondere der Aufnahmeseite, der Kopfseite und/oder der Auslassseite, des Deckels und/oder des Auslassnippels. Weiter bevorzugt ragt der Dichtring über die Dichtsitzfläche, insbesondere um ein definiertes Maß, hinaus. Bei Verspannung oder Verpressung des Leitkörpers mit der Anschlussgeometrie, dem Deckel, dem Einsetzteil oder dem Auslassnippel wird der Dichtring definiert in aller Regel so weit zusammengedrückt, bis die Dichtsitzfläche auf einer Oberfläche der Anschlussgeometrie beziehungsweise des Leitkörpers aufliegt. Hierdurch wirken Dichtsitzfläche und Dichtring gemeinsam als Fläche. Bevorzugt erfolgt so eine definierte Verpressung des Dichtringes. Der Rücksprung, in dem ein Dichtring eingelegt ist, umfasst insbesondere zur Sicherung des Dichtringes eine Hinterschneidung, in die der Dichtring eingreift. Die genannten Ausführungen der Dichtungen sind bevorzugt an allen Dichtungen des Winkelverschraubungssystems, insbesondere an der Dichtung des Deckels und der Aufnahmeseite, und des Auslassnippels vorgesehen. Durch die vorstehend beschriebenen vorteilhaften Ausgestaltungen ist beispielsweise eine elektrisch-leitende und oder wärmeleitende Verbindung zwischen Leitkörper, Einsetzteil, Deckel, Auslassnippel und/oder Anschlussgeometrie erzeugt. Bevorzugt ist das Winkelverschraubungssystem staubdicht und wasserdicht nach Schutzart IP 68, weiter bevorzugt bei etwa 10 bar bis etwa 15 bar, weiter bevorzugt IP 69K. Das Winkelverschraubungssystem bietet insbesondere Schutz bei Hochdruckreinigung.

Insbesondere umfasst zumindest eine Dichtung beziehungsweise ein Dichtring zumindest ein Material ausgewählt aus einer Gruppe umfassend thermoplastische Elastomere, bevorzugt Silikon und/oder thermoplastisches Polyurethan.

Eine erste beispielhafte Ausgestaltung des Winkelverschraubungssystems umfasst den oben beschriebenen Leitkörper, das Einsetzteil und den Deckel, wobei der Leitkörper genau eine Auslassausnehmung aufweist. In dieser beispielhaften Ausführungsform ist vorgesehen, dass das Einsetzteil den oben beschriebenen Leitabschnitt aufweist. Insbesondere weist in dieser Ausführungsform das Einsetzteil kein Anschlussmittel auf, das mit dem Leitabschnitt verbunden ist. In dieser Ausgestaltung umfasst der Leitabschnitt die Ausnehmung, die sich über eine vollständige Länge des Leitabschnittes entlang der Längsachse erstreckt. In dieser Ausführungsform umfasst der Leitkörper zumindest ein oben beschriebenes Positioniermittel. In dieser Ausgestaltung ist der Deckel als Blindstopfen ausgestaltet.

Eine zweite beispielhafte Ausgestaltung des Winkelverschraubungssystems umfasst den oben beschriebenen Leitkörper, das Einsetzteil und den Deckel, wobei der Leitkörper genau eine Auslassausnehmung aufweist. In dieser beispielhaften Ausführungsform ist vorgesehen, dass das Einsetzteil den oben beschriebenen Leitabschnitt aufweist. Insbesondere weist in dieser Ausführungsform das Einsetzteil kein Anschlussmittel auf, das mit dem Leitabschnitt verbunden ist. In dieser Ausgestaltung umfasst der Leitabschnitt die Ausnehmung, die sich über eine vollständige Länge des Leitabschnittes entlang der Längsachse erstreckt. In dieser Ausführungsform umfasst der Leitkörper zumindest ein oben beschriebenes Positioniermittel. In dieser Ausgestaltung ist der Deckel als Auslassnippel ausgestaltet.

Eine dritte beispielhafte Ausgestaltung des Winkelverschraubungssystems umfasst den oben beschriebenen Leitkörper, das Einsetzteil und den Deckel, wobei der Leitkörper genau eine Auslassausnehmung aufweist. In dieser beispielhaften Ausführungsform ist vorgesehen, dass das Einsetzteil den oben beschriebenen Leitabschnitt aufweist. Insbesondere weist in dieser Ausführungsform das Einsetzteil kein Anschlussmittel auf, das mit dem Leitabschnitt verbunden ist. In dieser Ausgestaltung umfasst der Leitabschnitt die Ausnehmung, die über eine vollständige Länge des Leitabschnittes entlang der Längsachse erstreckt. In dieser Ausführungsform umfasst der Leitkörper kein Positioniermittel. In dieser Ausgestaltung ist der Deckel als Auslassnippel ausgestaltet. Eine vierte beispielhafte Ausgestaltung des Winkelverschraubungssystems umfasst den oben beschriebenen Leitkörper, das Einsetzteil und den Deckel, wobei der Leitkörper genau eine Auslassausnehmung aufweist. In dieser beispielhaften Ausführungsform ist vorgesehen, dass das Einsetzteil den oben beschriebenen Leitabschnitt aufweist. Insbesondere weist in dieser Ausführungsform das Einsetzteil kein Anschlussmittel auf, das mit dem Leitabschnitt verbunden ist. In dieser Ausgestaltung umfasst der Leitabschnitt zumindest eine, in einer weiteren Ausgestaltung eine Anzahl, von nach zumindest einer Seite entlang der Längsachse begrenzte Ausnehmungen. In dieser Ausführungsform umfasst der Leitkörper kein Positioniermittel. In dieser Ausgestaltung ist der Deckel als Auslassnippel ausgestaltet.

Eine fünfte beispielhafte Ausgestaltung des Winkelverschraubungssystems umfasst den oben beschriebenen Leitkörper, das Einsetzteil und den Deckel, wobei der Leitkörper genau eine Auslassausnehmung aufweist. In dieser beispielhaften Ausführungsform umfasst das Einsetzteil den Leitabschnitt und das Anschlussmittel, wobei das Anschlussmittel wie oben beschrieben ausgestaltet sein kann. In dieser Ausgestaltung umfasst der Leitabschnitt zumindest eine, in einer weiteren Ausgestaltung eine Anzahl, von nach zumindest einer Seite entlang der Längsachse begrenzte Ausnehmungen. In dieser Ausführungsform umfasst der Leitkörper kein Positioniermittel. In dieser Ausgestaltung ist der Deckel als Auslassnippel ausgestaltet.

Eine sechste beispielhafte Ausgestaltung des Winkelverschraubungssystems umfasst den Leitkörper, das Einsetzteil und den Deckel, wobei der Leitkörper eine Mehrzahl, insbesondere zwei, drei oder mehr als drei, von Auslassausnehmungen aufweist. In dieser beispielhaften Ausführungsform ist vorgesehen, dass das Einsetzteil den oben beschriebenen Leitabschnitt aufweist. Insbesondere weist in dieser Ausführungsform das Einsetzteil kein Anschlussmittel auf, das mit dem Leitabschnitt verbunden ist. In dieser Ausgestaltung umfasst der Leitabschnitt die Ausnehmung, die über eine vollständige Länge des Leitabschnittes entlang der Längsachse erstreckt. In dieser Ausführungsform umfasst der Leitkörper zumindest ein oben beschriebenes Positioniermittel. In dieser Ausgestaltung ist der Deckel als Blindstopfen ausgestaltet.

Eine siebte beispielhafte Ausgestaltung des Winkelverschraubungssystems umfasst den Leitkörper, das Einsetzteil und den Deckel, wobei der Leitkörper eine Mehrzahl, insbesondere zwei, drei oder mehr als drei, von Auslassausnehmungen aufweist. In dieser beispielhaften Ausführungsform ist vorgesehen, dass das Einsetzteil den oben beschriebenen Leitabschnitt aufweist. Insbesondere weist in dieser Ausführungsform das Einsetzteil kein Anschlussmittel auf, das mit dem Leitabschnitt verbunden ist. In dieser Ausgestaltung umfasst der Leitabschnitt die Ausnehmung, die über eine vollständige Länge des Leitabschnittes entlang der Längsachse erstreckt. In dieser Ausführungsform umfasst der Leitkörper zumindest ein oben beschriebenes Positioniermittel. In dieser Ausgestaltung ist der Deckel als Auslassnippel ausgestaltet.

Eine achte beispielhafte Ausgestaltung des Winkelverschraubungssystems umfasst den Leitkörper, das Einsetzteil und den Deckel, wobei der Leitkörper eine Mehrzahl, insbesondere zwei, drei oder mehr als drei, von Auslassausnehmungen aufweist. In dieser beispielhaften Ausführungsform ist vorgesehen, dass das Einsetzteil den oben beschriebenen Leitabschnitt aufweist. Insbesondere weist in dieser Ausführungsform das Einsetzteil kein Anschlussmittel auf, das mit dem Leitabschnitt verbunden ist. In dieser Ausgestaltung umfasst der Leitabschnitt die Ausnehmung, die über eine vollständige Länge des Leitabschnittes entlang der Längsachse erstreckt. In dieser Ausführungsform umfasst der Leitkörper kein Positioniermittel. In dieser Ausgestaltung ist der Deckel als Auslassnippel ausgestaltet.

Eine neunte beispielhafte Ausgestaltung des Winkelverschraubungssystems umfasst den Leitkörper, das Einsetzteil und den Deckel, wobei der Leitkörper eine Mehrzahl, insbesondere zwei, drei oder mehr als drei, von Auslassausnehmungen aufweist. In dieser beispielhaften Ausführungsform ist vorgesehen, dass das Einsetzteil den oben beschriebenen Leitabschnitt aufweist. Insbesondere weist in dieser Ausführungsform das Einsetzteil kein Anschlussmittel auf, das mit dem Leitabschnitt verbunden ist. In dieser Ausgestaltung umfasst der Leitabschnitt zumindest eine, in einer weiteren Ausgestaltung eine Anzahl, von nach zumindest einer Seite entlang der Längsachse begrenzte Ausnehmungen. In dieser Ausführungsform umfasst der Leitkörper kein Positioniermittel. In dieser Ausgestaltung ist der Deckel als Auslassnippel ausgestaltet.

Eine zehnte beispielhafte Ausgestaltung des Winkelverschraubungssystems umfasst den Leitkörper, das Einsetzteil und den Deckel, wobei der Leitkörper eine Mehrzahl, insbesondere zwei, drei oder mehr als drei, von Auslassausnehmungen aufweist. In dieser beispielhaften Ausführungsform umfasst das Einsetzteil den Leitabschnitt und das Anschlussmittel, wobei das Anschlussmittel wie oben beschrieben ausgestaltet sein kann. In dieser Ausgestaltung umfasst der Leitabschnitt die Ausnehmung, die über eine vollständige Länge des Leitabschnittes entlang der Längsachse erstreckt. In dieser Ausführungsform umfasst der Leitkörper zumindest ein oben beschriebenes Positioniermittel. In dieser Ausgestaltung ist der Deckel als Blindstopfen ausgestaltet.

Eine elfte beispielhafte Ausgestaltung des Winkelverschraubungssystems umfasst den Leitkörper, das Einsetzteil und den Deckel, wobei der Leitkörper eine Mehrzahl, insbesondere zwei, drei oder mehr als drei, von Auslassausnehmungen aufweist. In dieser beispielhaften Ausführungsform umfasst das Einsetzteil den Leitabschnitt und das Anschlussmittel, wobei das Anschlussmittel wie oben beschrieben ausgestaltet sein kann. In dieser Ausgestaltung umfasst der Leitabschnitt die Ausnehmung, die über eine vollständige Länge des Leitabschnittes entlang der Längsachse erstreckt. In dieser Ausführungsform umfasst der Leitkörper zumindest ein oben beschriebenes Positioniermittel. In dieser Ausgestaltung ist der Deckel als Auslassnippel ausgestaltet.

Eine zwölfte beispielhafte Ausgestaltung des Winkelverschraubungssystems umfasst den Leitkörper, das Einsetzteil und den Deckel, wobei der Leitkörper eine Mehrzahl, insbesondere zwei, drei oder mehr als drei, von Auslassausnehmungen aufweist. In dieser beispielhaften Ausführungsform umfasst das Einsetzteil den Leitabschnitt und das Anschlussmittel, wobei das Anschlussmittel wie oben beschrieben ausgestaltet sein kann. In dieser Ausgestaltung umfasst der Leitabschnitt die Ausnehmung, die über eine vollständige Länge des Leitabschnittes entlang der Längsachse erstreckt. In dieser Ausführungsform umfasst der Leitkörper kein Positioniermittel. In dieser Ausgestaltung ist der Deckel als Auslassnippel ausgestaltet.

Eine dreizehnte beispielhafte Ausgestaltung des Winkelverschraubungssystems umfasst den Leitkörper, das Einsetzteil und den Deckel, wobei der Leitkörper eine Mehrzahl, insbesondere zwei, drei oder mehr als drei, von Auslassausnehmungen aufweist. In dieser beispielhaften Ausführungsform umfasst das Einsetzteil den Leitabschnitt und das Anschlussmittel, wobei das Anschlussmittel wie oben beschrieben ausgestaltet sein kann. In dieser Ausgestaltung umfasst der Leitabschnitt zumindest eine, in einer weiteren Ausgestaltung eine Anzahl, von nach zumindest einer Seite entlang der Längsachse begrenzte Ausnehmungen. In dieser Ausführungsform umfasst der Leitkörper zumindest ein oben beschriebenes Positioniermittel. In dieser Ausgestaltung ist der Deckel als Blindstopfen ausgestaltet.

Eine vierzehnte beispielhafte Ausgestaltung des Winkelverschraubungssystems umfasst den Leitkörper, das Einsetzteil und den Deckel, wobei der Leitkörper eine Mehrzahl, insbesondere zwei, drei oder mehr als drei, von Auslassausnehmungen aufweist. In dieser beispielhaften Ausführungsform umfasst das Einsetzteil den Leitabschnitt und das Anschlussmittel, wobei das Anschlussmittel wie oben beschrieben ausgestaltet sein kann. In dieser Ausgestaltung umfasst der Leitabschnitt zumindest eine, in einer weiteren Ausgestaltung eine Anzahl, von nach zumindest einer Seite entlang der Längsachse begrenzte Ausnehmungen. In dieser Ausführungsform umfasst der Leitkörper zumindest ein oben beschriebenes Positioniermittel. In dieser Ausgestaltung ist der Deckel als Auslassnippel ausgestaltet.

Eine fünftzehnte beispielhafte Ausgestaltung des Winkelverschraubungssystems umfasst den Leitkörper, das Einsetzteil und den Deckel, wobei der Leitkörper eine Mehrzahl, insbesondere zwei, drei oder mehr als drei, von Auslassausnehmungen aufweist. In dieser beispielhaften Ausführungsform umfasst das Einsetzteil den Leitabschnitt und das Anschlussmittel, wobei das Anschlussmittel wie oben beschrieben ausgestaltet sein kann. In dieser Ausgestaltung umfasst der Leitabschnitt zumindest eine, in einer weiteren Ausgestaltung eine Anzahl, von nach zumindest einer Seite entlang der Längsachse begrenzte Ausnehmungen. In dieser Ausführungsform umfasst der Leitkörper kein Positioniermittel. In dieser Ausgestaltung ist der Deckel als Blindstopfen ausgestaltet.

Eine sechzehnte beispielhafte Ausgestaltung des Winkelverschraubungssystems umfasst den Leitkörper, das Einsetzteil und den Deckel, wobei der Leitkörper eine Mehrzahl, insbesondere zwei, drei oder mehr als drei, von Auslassausnehmungen aufweist. In dieser beispielhaften Ausführungsform umfasst das Einsetzteil den Leitabschnitt und das Anschlussmittel, wobei das Anschlussmittel wie oben beschrieben ausgestaltet sein kann. In dieser Ausgestaltung umfasst der Leitabschnitt zumindest eine, in einer weiteren Ausgestaltung eine Anzahl, von nach zumindest einer Seite entlang der Längsachse begrenzte Ausnehmungen. In dieser Ausführungsform umfasst der Leitkörper kein Positioniermittel. In dieser Ausgestaltung ist der Deckel als Auslassnippel ausgestaltet.

Eine siebzehnte beispielhafte Ausgestaltung des Winkelverschraubungssystems umfasst einen Leitkörper, ein Einsetzteil und einen Deckel. Der Leitkörper weist eine Aufnahmeseite auf, von der aus sich in eine Leitausnehmung erstreckt. Die Leitausnehmung erstreckt sich entlang einer Leitachse von der Aufnahmeseite bis zu einer Kopfseite des Leitkörpers. Des Weiteren umfasst der Leitkörper eine Auslassseite, von der sich eine Auslassausnehmung entlang einer Auslassachse bis zur Leitausnehmung erstreckt. Die Auslassausnehmung umfasst zumindest in einem Abschnitt ein Innengewinde beispielsweise zur Aufnahme eines Auslassnippels.

Das Einsetzteil umfasst in dieser beispielhaften Ausführungsform ein Anschlussmittel, das als Befestigungsnippel ausgestaltet ist. Weiterhin umfasst das Einsetzteil einen Leitabschnitt, der mit dem Anschlussmittel drehbar verbindbar ist. Insbesondere umfasst das Leitmittel ein axiales Fixiermittel, in diesem Beispiel ein innen umlaufender Wulst ist, welches mit einem Haltemittel eines oberen Abschnittes des Anschlussmittels zusammenwirkt. Insbesondere hintergreift das axiale Fixiermittel das Haltemittel. Haltemittel und axiales Fixiermittel bilden ein Radiallager. Das Anschlussmittel umfasst an einem unteren Abschnitt des Weiteren ein Außengewinde, das beispielsweise in ein Gewinde der Anschlussgeometrie schraubbar ist. Der obere Abschnitt umfasst Schlüsselanlageflächen, zum Einschrauben des Anschlussmittels in die Anschlussgeometrie. Der Leitabschnitt umfasst in einem unteren Endbereich das axiale Fixiermittel. In einem oberen Endbereich ist ein Innengewinde vorgesehen, das mit einem Außengewinde des Deckels verschraubbar ist. Der Leitabschnitt ist bevorzugt hülsenförmig ausgestaltet und umfasst eine Mantelfläche. In der Mantelfläche ist über die vollständige Länge eine Ausnehmung vorgesehen, durch die ein Langformteil führbar ist. Weiterhin ist die Ausnehmung derart ausgestaltet, dass diese eine Positioniergeometrie aufweist, die durch die beiden Kanten der Ausnehmung gebildet wird. Die Positioniergeometrie wirkt mit den Positioniermitteln zusammen, die in diesem Beispiel der Kopfseite des Leitkörpers zugeordnet sind. Die Positioniermittel sind bevorzugt als Spannstifte ausgebildet, die weiter bevorzugt derart in den Leitkörper eingesetzt sind, dass diese teilweise in die Leitausnehmung ragen. Insbesondere richten Positioniermittel, und Positioniergeometrie den Leitabschnitt derart aus, dass die Ausnehmung mit der Auslassausnehmung zumindest teilweise deckungsgleich ist. Weiterhin kann in einer zusätzlich oder in einer alternativen Ausgestaltung vorgesehen sein, dass eine Befestigungskontur des Auslassnippels derart in den Leitkörper eingesetzt ist, dass diese in die Leitausnehmung ragt und mit der Positioniergeometrie zusammen wirkt und die Ausnehmung mit der Auslassausnehmung zumindest zum Teil deckungsgleich ausrichtet. Auch ist in einer alternativen oder zusätzlichen Ausgestaltung vorgesehen, dass durch das mindestens eine Langformteil, das durch eine durchgehende Öffnung des Anschlussmittels, durch den Leitabschnitt und die Auslassausnehmung geführt ist, die Ausnehmung mit der Auslassausnehmung ausrichtet wird. Insbesondere kann der Leitkörper um die Leitachse gedreht werden, wobei die Auslassausnehmung mit der Ausnehmung des Leitabschnittes ausgerichtet bleibt. Dies wird insbesondere durch das Radiallager ermöglicht, das durch Haltemittel und axiale Fixiermittel gebildet ist und erlaubt, dass sich der Leitabschnitt um eine Längsachse dreht, während das Anschlussmittel fixiert in der Anschlussgeometrie verbleibt. Die Leitachse der Leitausnehmung ist in einem Winkel größer 0° zur Auslassachse der Auslassausnehmung angeordnet, der hier bevorzugt etwa 90° beträgt.

Bei der Montage des Winkelverschraubungssystems wird mindestens ein Langformteil durch das Einsetzteil und in eine Leitausnehmung des den Leitkörpers eingeführt und aus einer Auslassausnehmung herausgeführt. Beispielsweise vor der Führung des Langformteils in oder durch zumindest das Einsetzteil und den Leitkörper wird zumindest der Leitabschnitt in die Leitausnehmung des Leitkörpers eingebracht wird. Wenn der Leitkörper um die Leitachse der Leitausnehmung gedreht wird, wird der Leitabschnitt mitgeführt, so dass mindestens die Ausnehmung des Leitabschnittes auf mindestens der Auslassausnehmung des Leitkörpers ausgerichtet wird. Das Einsetzteil wird in den Leitkörper eingesetzt und mit dem Deckel verschraubt. Durch Verschrauben und insbesondere Festziehen des Deckels über eine Kopfseite des Leitkörpers mit einem Gewinde des Leitabschnittes wird die Ausrichtung des Leitkörpers fixiert. Bei einer leichten Verschraubung des Deckels, bevorzugt bei einem angewandten Drehmoment von unter etwa 8 Nm, lässt sich der Leitkörper auf der Anschlussgeometrie um die Leitachse insbesondere von Hand drehen, so dass eine Auslassrichtung einstellbar ist. Nach Einstellung der Auslassrichtung wird der Deckel fest in das Einsetzteil geschraubt, insbesondere mit einem Drehmoment von etwa 8 Nm bis etwa 15 Nm, so dass der Leitkörper mit der Anschlussgeometrie verspannt ist und eine Drehung des Leitkörpers, insbesondere von Hand, nicht mehr möglich ist.

In allen vorbeschriebenen bevorzugten Ausführungsformen kann vorgesehen sein, dass Dichtungen vorgesehen sind, die das Winkelverschraubungssystem abdichten. Zumindest die Aufnahmeseite des Leitkörpers, der Deckel und der Anschlussnippel weisen jeweils zumindest einen Dichtring auf, der bevorzugt in einem Rücksprung oder einer Nut angeordnet ist. Eine Dichtsitzfläche, die radial innenliegend dem Dichtring zugeordnet ist erlaubt eine bevorzugt metallische, weiter bevorzugt wärmeleitende und/oder elektrisch-leitende Verbindung zu der Anschlussgeometrie beziehungsweise zum Leitkörper. Der Dichtring ragt bevorzugt ein definiertes Maß über die Dichtsitzfläche hinaus. Bei Verspannung des Leitkörpers mit der Anschlussgeometrie wird der Dichtring so weit zusammen gedrückt bis die Dichtsitzfläche auf einer Oberfläche der Anschlussgeometrie beziehungsweise des Leitkörpers aufliegt. Hierdurch wirken Dichtsitzfläche und Dichtring gemeinsam als dichtende Fläche und es kann weiter bevorzugt eine definierte Verpressung des Dichtringes erfolgen. Der Rücksprung oder die Nut, in dem ein Dichtring eingelegt ist, umfasst insbesondere zur Sicherung des Dichtringes eine Hinterschneidung, in die der Dichtring eingreift. Die genannten Ausführungsformen der Dichtungen sind bevorzugt an allen Dichtungen des Winkelverschraubungssystems, insbesondere an der Dichtung des Deckels und der Aufnahmeseite, und des Auslassnippels vorgesehen.

In allen Ausgestaltungen kann eine EMV-Dämpfung vorgesehen sein. Insbesondere weist das Winkelverschraubungssystem eine Ringfeder zur EMV-Dämpfung auf, insbesondere mit einer 360°-Schirmkontaktierung. Unter elektromagnetischer Verträglichkeit (EMV) ist die Fähigkeit eines Apparates, einer Anlage oder eines Systems zu verstehen, in der elektromagnetischen Umwelt zufriedenstellend zu arbeiten, ohne dabei selbst elektromagnetische Störungen zu verursachen, die für alle in dieser Umwelt vorhandenen Apparate, Anlagen oder Systeme unannehmbar wären. Die EMV-Dämpfung ermöglicht bevorzugt eine feldgebundene Störung auf und/oder von einem elektromagnetischen Feld eines Langformteils, das als Kabel ausgestaltet ist, zu minimieren.

Weiterhin wird ein Verfahren zur Montage eines oben beschriebenen Winkelverschraubungssystems vorgeschlagen, wobei das Winkelverschraubungssystem einen Leitkörper, ein Einsetzteil und einen Deckel umfasst, wobei das Einsetzteil mindestens einen drehbar zumindest teilweise in einem Inneren des Leitkörpers anordenbaren Leitabschnitt umfasst und wobei ein Langformteil durch das Einsetzteil und in eine Leitausnehmung des den Leitkörper eingeführt und aus mindestens einer Auslassausnehmung, die winklig zu der Leitausnehmung im Leitkörper angeordnet ist, herausgeführt wird. Vor oder nach Durchführung des Langformteils in oder durch zumindest das Einsetzteil wird zumindest der Leitabschnitt in eine Leitausnehmung des Leitkörpers eingebracht. Bei einem Drehen des Leitkörpers um eine Leitachse der Leitausnehmung wird der Leitabschnitt mitgeführt, so dass mindestens eine Ausnehmung des Leitabschnittes auf mindestens eine Auslassausnehmung des Leitkörpers ausgerichtet wird. Durch Verschrauben des Deckels über eine Kopfseite des Leitkörpers mit einem Gewinde des Leitabschnittes wird die Ausrichtung des Leitkörpers fixiert, und bevorzugt auch verspannt.

Bevorzugt kann mittels Drehen des Leitkörpers eine Auslassrichtung für das mindestens eine Langformteil eingestellt werden. Durch das vorgeschlagenen Verfahren wird die Durchführung des Langformteils durch die Anschlussgeometrie wesentlich vereinfacht. Das Einsetzteil ermöglicht zum einen die Vorbereitung des Langformteils zur winkligen Ausrichtung, indem dieses beispielsweise in einem ersten Schritt bevorzugt gerade durch das Einsetzteil, bevorzugt den Leitabschnitt, geführt wird. In einem nächsten Schritt wird das Langformteil durch den Leitkörper geführt, wobei beispielsweise dieses in die Leitaufnahme hinein und durch die Auslassausnehmung hinaus geführt wird. In einer weiteren Ausführungsform ist vorhergesehen, dass die Auslassausnehmung um die Leitachse herum ausgerichtet wird. Insbesondere ist auch eine Ausrichtung auch nach der Montage des Langformteils in dem Einsetzteil und Leitkörper, weiter bevorzugt auch nach der Montage des Einsetzteils in dem Leitkörper, möglich. Erst durch das Festziehen des Deckels wir eine Fixierung der Ausrichtung des Leitkörpers respektive der Auslassausnehmung erzeugt. Bevorzugt wird der Deckel mit einem Drehmoment von etwa 8 Nm bis etwa 15 Nm angezogen, um insbesondere eine verdrehsichere Fixierung des Leitkörpers zu erreichen.

Weiterhin ist in einer alternativen Ausgestaltung vorgesehen, dass anstatt des Deckels ein weiteres Winkelverschraubungssystem in das Einsetzteil geschraubt wird. Auf diese Weise können mehrere Winkelverschraubungssysteme kombiniert werden, um eine Mehrzahl von Langformteilen in die gleiche und/oder unterschiedliche Richtungen auszurichten. Wobei bevorzugt die Winkelverschraubungen ein dichtendes System bilden, die durch Anpassungen der Gewinde, insbesondere der Gewindelängen aneinander angepasst sind.

Weiterhin wird eine Verwendung eines oben beschriebenen Winkelverschraubungssystems zur Verschraubung und Ausrichtung mindestens eines Langformteils in einer abgewinkelten Position vorgeschlagen. Bevorzugt wird das Winkelverschraubungssystem für Kabelverschraubungen verwendet. Insbesondere ist das Winkelverschraubungssystem zur Verwendung in der Chemie, Pharmazie und/oder Lebensmitteltechnik vorgesehen. Hierzu weist das Winkelverschraubungssystem vorzugsweise ein EHEDG-Zertifikat der European der Hygienic Engineering & Design Group entsprechend der im Januar 2018 gültigen Richtlinie auf. Weiterhin wird die Winkelverschraubung in einer Ausführungsform in EMV-empfindlichen Umgebungen eingesetzt. Weiter bevorzugt umfasst das Winkelverschraubungssystem eine EMV-Schirmung, die weiter bevorzugt von einer Abdichtung, insbesondere einem Dichtring getrennt ist. Weiter bevorzugt wird das Winkelverschraubungssystem zur EMV-Dämpfung von etwa 80 dB bis 90 dB bei bis 100 MHz verwendet, weiter bevorzugt zur EMV-Dämpfungen von etwa 50 dB bis etwa 80 dB bei bis 2,5 GHz.

In einer weiteren Ausgestaltung wird das Winkelverschraubungssystem verwendet, um Langformteile in explosiven Umgebungen zu verschrauben und insbesondere durch die Anschlussgeometrie zu führen. Bevorzugt erfüllt das Winkelverschraubungssystem die Anforderungen der ATEX-Richtlinie 94/9/EG in der im Januar 2018 gültigen Ausführung.

Weitere vorteilhafte Ausgestaltungen gehen aus den nachfolgenden Zeichnungen hervor. Es sei darauf verwiesen, dass die in der Figurenbeschreibung angegebenen Bezugszeichen den Schutzbereich der vorliegenden Erfindung nicht beschränken, sondern lediglich auf die in den Figuren gezeigten Ausführungsbeispiele verweisen. Gleiche Teile oder Teile mit gleicher Funktion weisen im Folgenden die gleichen Bezugszeichen auf. Es zeigen:
Fig. 1 eine Explosionsdarstellung eines Winkelverschraubungssystems;
Fig. 2 eine Unteransicht des Winkelverschraubungssystems gemäß Ansicht II-II aus Fig. 3 ohne Auslassnippel;
Fig. 3 eine Schnittansicht des Schnittes III-III aus Fig. 2;
Fig. 4 eine Detailansicht IV aus Fig. 3;
Fig. 5 eine Schnittansicht V-V aus Fig. 2; und
Fig. 6 eine Skizze eines montierten Winkelverschraubungssystems.

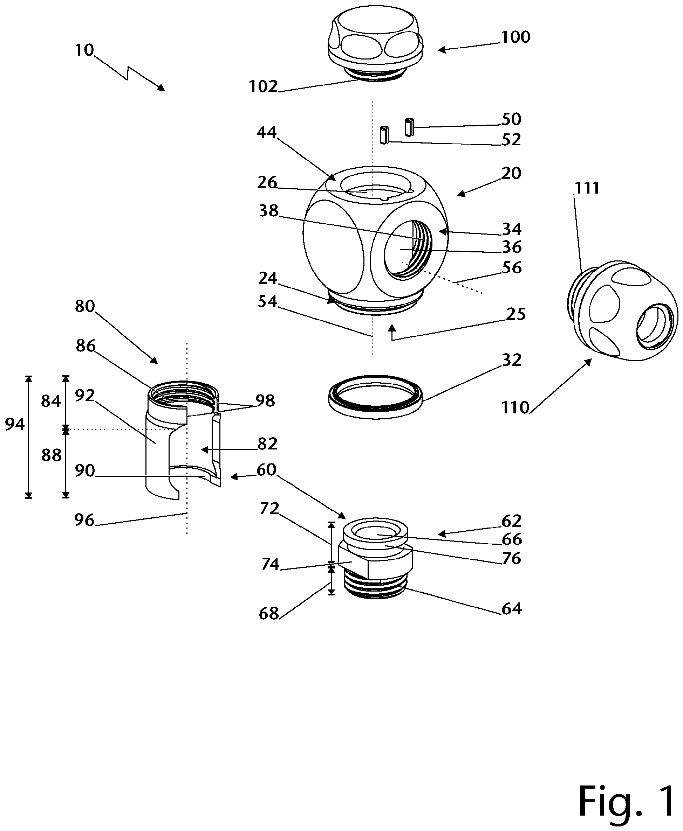

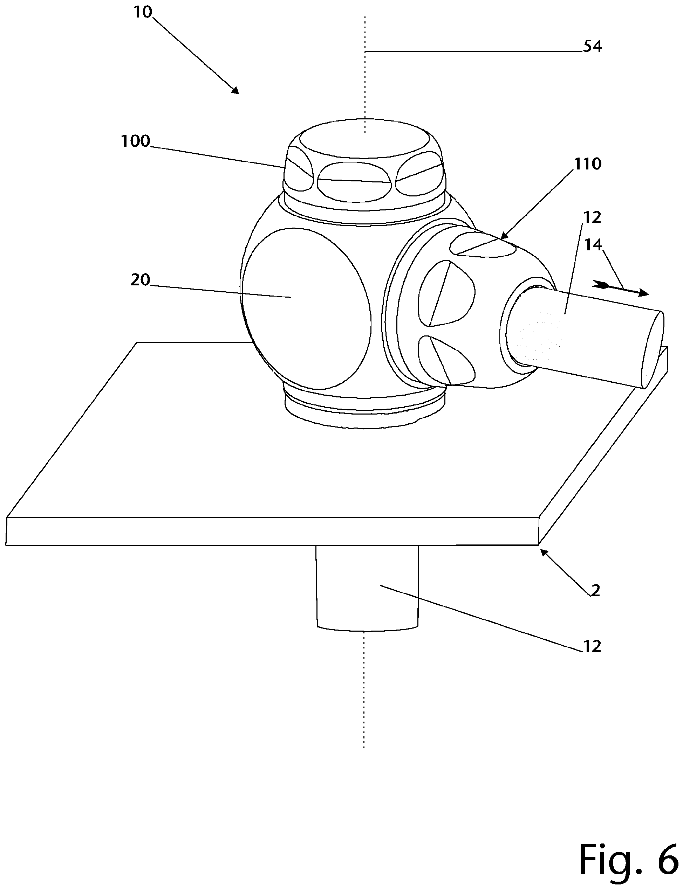

Fig. 1 zeigt eine Explosionsdarstellung eines Winkelverschraubungssystems 10. Dieses umfasst einen Leitkörper 20, ein Einsetzteil 60 und einen Deckel 100. Der Leitkörper 20 weist eine Aufnahmeseite 24 mit einer Aufnahmeöffnung 25 auf, die sich in eine Leitausnehmung 26 erstreckt. Die Leitausnehmung 26 erstreckt sich entlang einer Leitachse 54 von der Aufnahmeseite 24 bis zu einer Kopfseite 44. Der Aufnahmeseite 24 ist ein Dichtring 32 zugeordnet, damit eine Abdichtung des Winkelverschraubungssystems 10 zu einer wie in Fig. 6 dargestellten Anschlussgeometrie 2 erfolgt. Des Weiteren umfasst der Leitkörper 20 eine Auslassseite 34, von der sich eine Auslassausnehmung 36 entlang einer Auslassachse 56 bis zur Leitausnehmung 26 erstreckt. Die Auslassausnehmung 36 umfasst zumindest in einem Abschnitt ein Innengewinde 38 zur Aufnahme eines Auslassnippels 110.

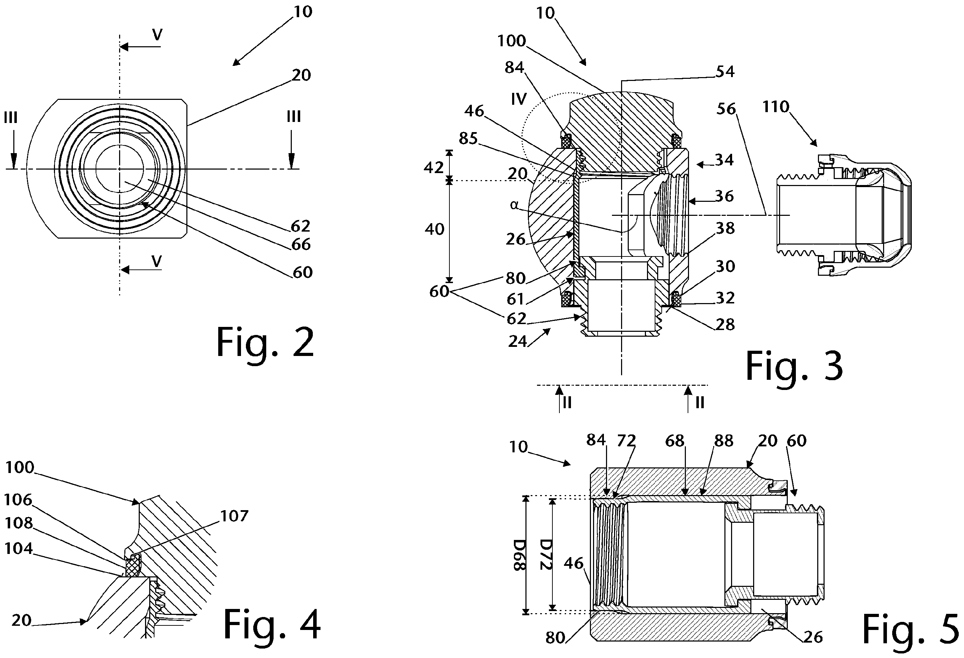

Das Einsetzteil 60 umfasst in der gezeigten Ausführungsform ein Anschlussmittel 62, das als Befestigungsnippel ausgestaltet ist. Weiterhin umfasst das Einsetzteil 60 einen Leitabschnitt 80, der mit dem Anschlussmittel 62 drehbar verbindbar ist. Insbesondere umfasst das Leitmittel 80 ein axiales Fixiermittel 90 in Form eines innen umlaufenden Wulstes, welches mit einem Haltemittel 76 eines oberen Abschnittes 72 des Anschlussmittels 62 zusammenwirkt. Insbesondere hintergreift das axiale Fixiermittel 90 das Haltemittel 76. Haltemittel 76 und axiales Fixiermittel bilden ein in Fig. 3 dargestelltes Radiallager 61. Das Anschlussmittel 62 umfasst an einem unteren Abschnitt 68 des Weiteren ein Außengewinde 64, das beispielsweise in ein Gewinde der Anschlussgeometrie 2 schraubbar ist. Der obere Abschnitt 72 umfasst Schlüsselanlageflächen 74 zum Einschrauben des Anschlussmittels 62 in die Anschlussgeometrie 2. Der Leitabschnitt 80 umfasst in einem unteren Endbereich 88 das axiale Fixiermittel 90. In einem oberen Endbereich 84 ist ein Innengewinde 86 vorgesehen, das mit einem Deckelgewinde 102 des Deckels 100 verschraubbar ist. Der Leitabschnitt 80 ist bevorzugt hülsenförmig ausgestaltet und umfasst eine Mantelfläche 92. In der Mantelfläche 92 ist über die vollständige Länge 94 eine Ausnehmung 82 vorgesehen, durch die ein Langformteil 12 (siehe Fig. 6) führbar ist. Weiterhin ist die Ausnehmung 82 derart ausgestaltet, dass diese eine Positioniergeometrie 98 aufweist, die durch die Kanten der Ausnehmung 82 gebildet ist. Die Positioniergeometrie 98 wirkt mit Positioniermitteln 50, 52 zusammen, die in diesem Beispiel der Kopfseite 44 des Leitkörpers 20 zugeordnet sind. Die Positioniermittel 50, 52 sind als Spannstifte ausgebildet, die derart in den Leitkörper 20 eingesetzt sind, dass diese teilweise in die Leitausnehmung 26 ragen, so dass diese mit der Positioniergeometrie zusammen wirken können. Insbesondere richten Positioniermittel 50,52 und Positioniergeometrie 98 den Leitabschnitt 80 derart aus, dass die Ausnehmung 82 mit der Auslassausnehmung 36 zumindest teilweise deckungsgleich ist. Weiterhin kann zusätzlich oder in einer alternativen Ausgestaltung vorgesehen sein, dass eine Befestigungskontur 111 des Auslassnippels 110 derart in den Leitkörper eingesetzt ist, dass diese in die Leitausnehmung 26 ragt und mit der Positioniergeometrie 98 zusammen wirkt und so die Ausnehmung 82 mit der Auslassausnehmung 36 zumindest zum Teil deckungsgleich ausrichtet. Auch ist in einer Ausgestaltung vorgesehen, dass durch das Langformteil 12, das durch eine durchgehende Öffnung 66 des Anschlussmittels 62, durch den Leitabschnitt 80 und die Auslassausnehmung 36 geführt ist, die Ausnehmung 82 mit der Auslassausnehmung 36 ausrichtet. Insbesondere kann der Leitkörper 20 um die Leitachse 54 gedreht werden, wobei die Auslassausnehmung 36 mit der Ausnehmung 86 des Leitabschnittes 80 ausgerichtet bleibt. Dies wird insbesondere durch das Radiallager 61 ermöglicht, das durch Haltemittel 76 und axiale Fixiermittel 90 gebildet ist und erlaubt, dass sich der Leitabschnitt 80 um eine Längsachse 96 dreht, während das Anschlussmittel 62 fixiert in der Anschlussgeometrie 2 verbleibt.

Fig. 2 zeigt eine Unteransicht auf das Winkelverschraubungssystem 10 gemäß Ansicht II-II aus Fig. 3 ohne Auslassnippel 110. Zu erkennen ist, das Einsetzteil 60 mit dem Anschlussmittel 62 und dem Leitabschnitt 80 in den Leitkörper 20 eingesetzt ist.

Fig. 3 zeigt eine Schnittansicht III-III aus Fig. 2 mit dem dichtend angeordneten Deckel 100 und dem Anschlussnippel 110, der zur Verdeutlichung der Positionierung separiert von dem Winkelverschraubungssystem 10 der Ansicht hinzugefügt ist. Das Einsetzteil 60 mit dem Anschlussmittel 62 und dem Leitabschnitt 80 sind in die Leitausnehmung 26 des Leitkörpers 20 eingesetzt. Leitabschnitt 80 und Anschlussmittel 62 sind über das Radiallager 61 miteinander verbunden. Der Deckel 100 ist in das Leitmittel 80 eingeschraubt. Die Leitachse 54 der Leitausnehmung 26 ist in einem Winkel α zur Auslassachse 56 der Auslassausnehmung 36 angeordnet, der hier 90° beträgt.

Weiterhin ist Fig. 3 zu entnehmen, dass der obere Endbereich 84 des Leitabschnittes 80 eine Verjüngung 85 aufweist, die in eine Verjüngung 46 der Leitausnehmung 26 hinein ragt. Durch diese ineinander passbaren Verjüngungen 84, 46 wird eine Eindringtiefe des Leitabschnittes 80 in die Leitausnehmung 26 begrenzt und eine falsche Montage des Einsetzteils 60 in den Leitkörper 20 ausgeschlossen ist.

Fig. 3 und Fig. 4, die ein Detail IV aus Fig. 3 zeigt, sind Dichtungen zu entnehmen, die das Winkelverschraubungssystem 10 abdichten. So geht aus Fig. 3 hervor, dass die Aufnahmeseite 24 des Leitkörpers 20 den Dichtring 32 aufweist, der in einem Rücksprung 30 angeordnet ist. Eine Dichtsitzfläche 28 des Leitkörpers 20 erlaubt eine metallische, insbesondere wärmeleitende und elektrisch-leitende Verbindung zu der Anschlussgeometrie 2, die hier der Übersichtlichkeit nicht dargestellt ist. Der Dichtring 32 ragt ein definiertes Maß über die Dichtsitzfläche 28 hinaus. Bei Verspannung des Leitkörpers 20 mit der Anschlussgeometrie 2 wird der Dichtring 32 so weit komprimiert, bis die Dichtsitzfläche 28 auf einer Oberfläche der Anschlussgeometrie aufliegt. Hierdurch wirken Dichtsitzfläche 28 und Dichtring gemeinsam als Fläche und es kann weiter bevorzugt eine definierte Verpressung des Dichtringes 32 erfolgen.

Aus Fig. 4 ist zu entnehmen, dass der Deckel 100 einen Rücksprung 106 aufweist, in dem ein Dichtring 108 eingelegt ist. Dieser liegt auf einer Dichtsitzfläche 104 des Leitkörpers auf und dichtet den Deckel 100 ab. Zur Sicherung des Dichtringes 108 auf dem Rücksprung 106 weist dieser eine Hinterschneidung 107 auf, mit der der Dichtring 108 zusammen wirkt.

Die in Fig. 3 und Fig. 4 gezeigten Ausführungen der Dichtungen sind bevorzugt an allen Dichtungen des Winkelverschraubungssystems 20, insbesondere an der Dichtung des Deckels 100 und der Aufnahmeseite 24, und des Auslassnippels 110 vorgesehen.

Fig. 5 zeigt eine Schnittansicht V-V aus Fig. 2 ohne Deckel 100. Dieser ist zu entnehmen, dass die Leitausnehmung 26 des Leitkörpers 20 einen unteren Abschnitt 68 und einen oberen Abschnitt 72 aufweist. Der obere Abschnitt 72 weist eine Verjüngung 46 auf, die einen Innendurchmesser D72 aufweist, der kleiner ist als ein Innendurchmesser D68 des unteren Abschnittes 68. Weiterhin ist zu erkennen, dass das Einsetzteil 60 mit dem Leitabschnitt 80 in die Leitausnehmung 26 des Leitkörpers 20 eingesetzt ist, wobei der Leitabschnitt 80 einen oberen Endbereich 84 und einen unteren Endbereich 88 aufweist. Der obere Endbereich 84 weist einen Außendurchmesser auf, der mit einer Spielpassung in den Innendurchmesser D72 passt. Dieser ist der Übersichtlichkeit halber nicht eingezeichnet. Weiterhin weist der untere Endbereich 88 einen Außendurchmesser auf, der mit einer Spielpassung in den Innendurchmesser D68 der Leitausnehmung 26 passt. Auch dieser ist der Übersichtlichkeit halber nicht zusätzlich eingezeichnet.

Fig. 6 zeigt einen beispielhaften Zusammenbau des Winkelverschraubungssystems 10 und die Montage des Winkelverschraubungssystems 10 mit einer Anschlussgeometrie 2, bei dem das hier nicht sichtbare Einsetzteil 60 in den Leitkörper 20 eingesetzt und mit dem Deckel 100 verschraubt ist. Das Langformteil 12 ist durch die Anschlussgeometrie 2, das Winkelverschraubungssystem 10 und den Auslassnippel 110 geführt. Bei einer leichten Verschraubung des Deckels 100, insbesondere bei welcher ein Drehmoment von unter 8 Nm aufgewendet ist, lässt sich der Leitkörper 20 auf der Anschlussgeometrie 2 um die Leitachse 54 insbesondere von Hand drehen, so dass eine Auslassrichtung 14 einstellbar ist. Nach Einstellung der Auslassrichtung 14 wird der Deckel 100 fest in das Einsetzteil geschraubt, insbesondere mit einem Drehmoment von etwa 12 Nm bis etwa 15 Nm, so dass der Leitkörper 20 mit der Anschlussgeometrie 2 verspannt ist und eine Drehung des Leitkörpers 20, insbesondere von Hand, nicht mehr möglich ist.

Die in den Figuren dargestellten Weiterbildungen sind nicht beschränkend auszulegen, vielmehr können die dort beschriebenen Merkmale untereinander und mit den oben beschriebenen Merkmalen zu weiteren Ausgestaltungen kombiniert werden. Beispielsweise kann in einer Ausführungsform vorgesehen sein, dass das Verbindungsmittel abschnittsweise einen größeren Durchmesser aufweist als die Leitausnehmung und somit ein Eindringen des Einsetzteils in die Leitausnehmung begrenzt ist.

Mit dem vorgeschlagenen Winkelverschraubungssystem 10 ist eine komfortable Möglichkeit geschaffen, Langformteile 12 mit einer Anschlussgeometrie 2 zu verschrauben, wobei eine Einstellung beziehungsweise eine Justage der Auslassrichtung 14 des Langformteils 12 auch noch nach der Montage des Winkelverschraubungssystem möglich ist. Durch Lösen des Deckels 100 ist auch eine spätere Anpassung der Auslassrichtung 14 möglich.

## Patentansprüche

1. Winkelverschraubungssystem (10) zur Verschraubung und Umleitung von Langformteilen (12) umfassend einen Leitkörper (20), ein Einsetzteil (60) und einen Deckel (100), wobei das Einsetzteil (60) mindestens einen drehbar zumindest teilweise in einem Inneren des Leitkörpers (20) angeordneten Leitabschnitt (80) umfasst, wobei der Leitkörper (20) eine Leitausnehmung (26) und mindestens eine Auslassausnehmung (36) aufweist, wobei die Leitausnehmung (26) eine Leitachse (54) aufweist und sich entlang der Leitachse (54) von einer Aufnahmeseite (24) bis zu einer gegenüberliegenden Kopfseite (44) des Leitkörpers (20) erstreckt und wobei die Auslassausnehmung (36) eine Auslassachse (56) aufweist und sich von mindestens einer Auslassseite (34) des Leitkörpers (20) entlang der Auslassachse (56) zumindest bis zur Leitausnehmung (26) erstreckt, wobei die Leitachse (54) und die Auslassachse (56) einen Winkel (a) zueinander aufweisen, wobei der Leitabschnitt (80) an einem der Kopfseite (44) des Leitkörpers (20) zuordenbaren oberen Endbereich (84) ein Gewinde (86) aufweist, und wobei der Deckel (100) von der Kopfseite (44) mit dem Gewinde (86) des Leitabschnittes (80) verschraubbar ist.

2. Winkelverschraubungssystem (10) nach Anspruch 1, **dadurch gekennzeichnet, dass** der Leitabschnitt (80) eine Mantelfläche (92) aufweist, die mindestens eine Ausnehmung (82) umfasst.

3. Winkelverschraubungssystem (10) nach Anspruch 2, **dadurch gekennzeichnet, dass** der Leitabschnitt (80) eine Längsachse (96) aufweist, wobei sich die Ausnehmung (82) über eine vollständige Länge (94) des Leitabschnittes (80) entlang der Längsachse (96) erstreckt.

4. Winkelverschraubungssystem (10) nach einem oder mehreren der vorhergehenden Ansprüche, **dadurch gekennzeichnet, dass** das Einsetzteil (60) weiterhin ein Anschlussmittel (62) umfasst, welches im Bereich der Aufnahmeseite (24) des Leitkörpers (20) angeordnet ist.

5. Winkelverschraubungssystem (10) nach Anspruch 4, **dadurch gekennzeichnet, dass** ein unterer Endbereich (88) des Leitabschnittes (80), der der Aufnahmeseite (24) des Leitkörpers (20) zuordenbar ist, ein axiales Fixiermittel (90) aufweist, das mit zumindest einem Haltemittel (76) des Anschlussmittels (62) oder zumindest einer Anschlussgeometrie (2) ein Radiallager (61) bildet.

6. Winkelverschraubungssystem (10) nach einem oder mehreren der Ansprüche 4 bis 5, **dadurch gekennzeichnet, dass** das Anschlussmittel (62) am oberen Abschnitt (72) Schlüsselanlageflächen (74) aufweist.

7. Winkelverschraubungssystem (10) nach einem oder mehreren der Ansprüche 4 bis 6, **dadurch gekennzeichnet, dass** das Anschlussmittel (62) ein Außengewinde (64) umfasst.

8. Winkelverschraubungssystem (10) nach einem oder mehreren der Ansprüche 2 bis 7, **dadurch gekennzeichnet, dass** der Leitabschnitt (80) zumindest eine Positioniergeometrie (98) aufweist, mittels der die Ausnehmung (82) mit der Auslassausnehmung (36) in Deckung bringbar ist.

9. Winkelverschraubungssystem (10) nach einem oder mehreren der vorhergehenden Ansprüche, **dadurch gekennzeichnet, dass** in der Leitausnehmung (26) zumindest ein Positioniermittel (50, 52) zur Ausrichtung des Leitabschnittes (80) angeordnet ist.

10. Verfahren zur Montage eines Winkelverschraubungssystems (10) nach einem oder mehreren der vorhergehenden Ansprüche, wobei das Winkelverschraubungssystem (10) einen Leitkörper (20), ein Einsetzteil (60) und einen Deckel (100) umfasst, wobei das Einsetzteil (60) zumindest einen drehbar zumindest teilweise in einem Inneren des Leitkörpers (20) anordenbaren Leitabschnitt (80) umfasst, wobei mindestens ein Langformteil (12) durch das Einsetzteil (60) und in eine Leitausnehmung (26) des Leitkörpers (20) geführt und aus einer Auslassausnehmung (36), die winklig zu der Leitausnehmung (26) im Leitkörper (20) angeordnet ist, herausgeführt wird und vor oder nach Führung des Langformteils (12) in oder durch zumindest das Einsetzteil (60) zumindest der Leitabschnitt (80) in die Leitausnehmung (26) des Leitkörpers (20) eingebracht wird, wobei bei einem Drehen des Leitkörpers (20) um eine Leitachse (54) der Leitausnehmung (26) der Leitabschnitt (80) mitgeführt wird, so dass mindestens eine Ausnehmung (82) des Leitabschnittes (80) auf mindestens eine Auslassausnehmung (36) des Leitkörpers (20) ausgerichtet wird und wobei durch Verschrauben des Deckels (100) über eine Kopfseite (44) des Leitkörpers (20) mit einem Gewinde (86) des Leitabschnittes (80) die Ausrichtung des Leitkörpers (20) fixiert wird.

11. Verwendung eines Winkelverschraubungssystems (10) nach einem oder mehreren der Ansprüche 1 bis 9 zur Verschraubung und Ausrichtung mindestens eines Langformteils (12) in einer abgewinkelten Position.

## Claims

1. Elbow screw joint system (10) for screwing and redirecting of long-shaped parts (12) comprising a guide body (20), an insertion part (60) and a cover (100), wherein the insertion part (60) includes at least one rotatable guide section (80) disposed at least partly in an interior of the guide body (20), wherein the guide body (20) includes a guide recess (26) and at least one outlet recess (36), wherein the guide recess (26) has a guide axis (54) and extends along the guide axis (54) from one receiving side (24) up to an opposing head side (44) of the guide body (20), and wherein the outlet recess (36) has an outlet axis (56) and extends from at least one outlet side (34) of the guide body (20) along the outlet axis (56) at least up to the guide recess (26), wherein the guide axis (54) and the outlet axis (56) have an angle (α) to each other, wherein the guide section (80) includes a threading (86) on an upper end region (84) associated with the head side (44) of the guide body (20), and wherein the cover (100) can be screwed from the head side (44) to the threading (86) of the guide section (80).

2. Elbow screw joint system (10) according to claim 1, **characterized in that** the guide section (80) includes an outer surface (92) which comprises at least one recess (82).

3. Elbow screw joint system (10) according to claim 2, **characterized in that** the guide section (80) has a longitudinal axis (96), wherein the recess (82) extends across an entire length (94) of the guide section (80) along the longitudinal axis (96).

4. Elbow screw joint system (10) according to one or more of the preceding claims, **characterized in that** the insertion part (60) furthermore comprises a joining means (62) which is disposed in the region of the receiving side (24) of the guide body (20).

5. Elbow screw joint system (10) according to claim 4, **characterized in that** a lower end region (88) of the guide section (80) which can be associated with the receiving side (24) of the guide body (20), includes an axial locking means (90) which forms a radial support (61) with at least one retaining means (76) of the joining means (62) or with at least one joining geometry (2).

6. Elbow screw joint system (10) according to one or more of claims 4 to 5, **characterized in that** the joining means (62) includes key-abutment surfaces (74) at the upper section (72).

7. Elbow screw joint system (10) according to one or more of claims 4 to 6, **characterized in that** the joining means (62) comprises an exterior threading (64).

8. Elbow screw joint system (10) according to one or more of claims 2 to 7, **characterized in that** the guide section (80) has at least one positioning geometry (98) by which the recess (82) can be brought to coincidence with the outlet recess (36).

9. Elbow screw joint system (10) according to one or more of the preceding claims, **characterized in that** at least one positioning means (50, 52) is arranged in the guide recess (26) for aligning of the guide section (80).

10. Method for assembling of an elbow screw joint system (10) according to one or more of the preceding claims, wherein the elbow screw joint system (10) comprises a guide body (20), an insertion part (60) and a cover (100), wherein the insertion part (60) comprises at least one rotatable guide section (80) which can be disposed at least partly in an interior of the guide body (20), wherein at least one long-shaped part (12) is inserted through the insertion part (60) and is guided into a guide recess (26) of the guide body (20) and is guided out of an outlet recess (36) which is arranged at an angle to the guide recess (26) in the guide body (20) and before or after guiding of the long-shaped part (12) into or through at least the insertion part (60), at least the guide section (80) is inserted into the guide recess (26) of the guide body (20), wherein with a rotation of the guide body (20) around a longitudinal axis (54) of the guide recess (26), the guide section (80) is carried along, so that at least one recess (82) of the guide section (80) is aligned to at least one outlet recess (36) of the guide body (20), and wherein by screwing of the cover (100) over a head side (44) of the guide body (20) to a threading (86) of the guide section (80), the alignment of the guide body (20) is locked.

11. Use of an elbow screw joint system (10) according to one or more of claims 1 to 9 for screwing and alignment of at least one long-shaped part (12) in an angled position.

## Revendications

1. Système de raccord à vis coudé (10) pour visser et contourner des éléments longitudinaux (12) comprenant un corps de guidage (20), un élément d'insertion (60) et un couvercle (100), ledit élément d'insertion (60) comprenant au moins une partie de guidage (80) disposée de manière rotative au moins partiellement à l'intérieur dudit corps de guidage (20), ledit corps de guidage (20) ayant un évidement de guidage (26) et au moins un évidement de sortie (36), dans lequel ledit évidement de guidage (26) forme un axe de guidage (54) et s'étend le long dudit axe de guidage (54) depuis un côté de réception (24) jusqu'à un côté de tête opposé (44) dudit corps de guidage (20), et dans lequel ledit évidement de sortie (36) forme un axe de sortie (56) et s'étend depuis au moins un côté de sortie (34) dudit corps de guidage (20) le long dudit axe de sortie (56) au moins jusqu'audit évidement de guidage (26), ledit axe de guidage (54) et ledit axe de sortie (56) formant un angle (a) l'un par rapport à l'autre, ladite partie de guidage (80) présentant un filetage (86) sur une zone d'extrémité supérieure (84) qui peut être associée au côté de tête (44) dudit corps de guidage (20), et ledit couvercle (100) pouvant être vissé depuis ledit côté de tête (44) sur ledit filetage (86) de ladite partie de guidage (80).

2. Système de raccord à vis coudé (10) selon la revendication 1, **caractérisé en ce que** ladite partie de guidage (80) forme une surface enveloppante (92) comprenant au moins un évidement (82).

3. Système de raccord à vis coudé (10) selon la revendication 2, **caractérisé en ce que** ladite partie de guidage (80) forme un axe longitudinal (96), ledit évidement (82) s'étendant sur toute une longueur (94) de ladite partie de guidage (80) le long dudit axe longitudinal (96).

4. Système de raccord à vis coudé (10) selon une ou plusieurs des revendications précédentes, **caractérisé en ce que** ledit élément d'insertion (60) comprend en outre un moyen de raccordement (62) disposé dans la zone dudit côté de réception (24) dudit corps de guidage (20).

5. Système de raccord à vis coudé (10) selon la revendication 4, **caractérisé en ce qu'**une zone d'extrémité inférieure (88) de ladite partie de guidage (80), qui peut être associée audit côté de réception (24) dudit corps de guidage (20), présente un moyen de fixation axial (90) qui forme un palier radial (61) avec au moins un moyen de retenue (76) dudit moyen de raccordement (62) ou au moins une géométrie de raccordement (2).

6. Système de raccord à vis coudé (10) selon une ou plusieurs des revendications 4 à 5, **caractérisé en ce que** ledit moyen de raccordement (62) comprend des surfaces de contact de clé (74) dans une partie supérieure (72).

7. Système de raccord à vis coudé (10) selon une ou plusieurs des revendications 4 à 6, **caractérisé en ce que** ledit moyen de raccordement (62) comprend un filetage externe (64).

8. Système de raccord à vis coudé (10) selon une ou plusieurs des revendications 2 à 7, **caractérisé en ce que** ladite partie de guidage (80) comprend au moins une géométrie de positionnement (98) au moyen de laquelle ledit évidement (82) peut être amené en alignement avec ledit évidement de sortie (36).

9. Système de raccord à vis coudé (10) selon une ou plusieurs des revendications précédentes, **caractérisé en ce qu'**au moins un moyen de positionnement (50, 52) est disposé dans ledit évidement de guidage (26) pour aligner ladite partie de guidage (80).

10. Procédé d'assemblage d'un système de raccord à vis coudé (10) selon une ou plusieurs des revendications précédentes, dans lequel ledit système de raccord à vis coudé (10) comprend pour un corps de guidage (20), un élément d'insertion (60) et un couvercle (100), ledit élément d'insertion (60) comprenant au moins une partie de guidage (80) disposée de manière rotative au moins partiellement à l'intérieur dudit corps de guidage (20), au moins un élément longitudinal (12) étant guidé à travers ledit élément d'insertion (60) et dans un évidement de guidage (26) dudit corps de guidage (20) et hors d'un évidement de sortie (36) qui est disposé en angle par rapport audit évidement de guidage (26) dans ledit corps de guidage (20), avant ou après ledit guidage dudit élément longitudinal (12) dans ou à travers au moins ledit élément d'insertion (60), au moins ladite partie de guidage (80) est introduite dans ledit évidement de guidage (26) dudit corps de guidage (20), ladite partie de guidage (80) étant entraînée par une rotation dudit corps de guidage (20) autour d'un axe de guidage (54) dudit évidement de guidage (26) de sorte qu'au moins un évidement (82) de ladite partie de guidage (80) est aligné avec au moins un évidement de sortie (36) dudit corps de guidage (20), et l'alignement dudit corps de guidage (20) étant fixé en vissant ledit couvercle (100) sur un côté de tête (44) dudit corps de guidage (20) avec un filetage (86) de ladite section de guidage (80).

11. Utilisation d'un système de raccord à vis coudé (10) selon une ou plusieurs des revendications 1 à 9 pour visser et aligner au moins un élément longitudinal (12) dans une position angulaire.
